# EUROPÄISCHE PATENTSCHRIFT

(11) **EP 3 600 996 B1**
(45) Veröffentlichungstag und Bekanntmachung des Hinweises auf die Patenterteilung: **27.01.2021**
(21) Anmeldenummer: 18715524.7
(22) Anmeldetag: 20.03.2018
(51) Int. Cl.: B60T 13/68

(54) **INTEGRIERTES ANHÄNGERSTEUERMODUL (TCV) MIT EXTERNER ELEKTROPNEUMATISCHER HANDBREMSEINHEIT (EPH)**
INTEGRATED TRAILER CONTROL MODULE WITH EXTERNAL ELECTRO-PNEUMATIC PARKING BRAKE UNIT
MODULE INTEGRE POUR REMORQUE AVEC UNITÉ EXTERNE DE FREINAGE DE STATIONNEMENT ELECTRO-PNEUMATIQUE

(30) Priorität: 21.03.2017 DE 102017002953; 24.06.2017 DE 102017005980
(43) Veröffentlichungstag der Anmeldung: 05.02.2020
(73) Patentinhaber: WABCO GmbH, 30453 Hannover (DE)
(72) Erfinder: VAN THIEL, Julian, 30938 Großburgwedel (DE)
(74) Vertreter: Schiller, Harald
(86) Internationale Anmeldenummer: PCT/EP2018/056995
(87) Internationale Veröffentlichungsnummer: WO 2018/172340

(56) Entgegenhaltungen:
- EP-A1- 2 615 003
- DE-A1-102007 014 423
- DE-A1-102012 105 136
- DE-B3-102014 108 681

## Beschreibung

Die Erfindung betrifft ein elektropneumatisches Anhängersteuermodul für ein elektronisch steuerbares pneumatisches Bremssystem für einen Fahrzeugzug mit einem Zugwagen und einem Anhängerwagen, mit einem elektronischen Steuergerät, einem pneumatischen Vorratseingang, der mit einem Druckluftvorrat verbindbar ist, einer Anhängersteuer-Ventileinheit mit einem oder mehreren elektropneumatischen Ventilen, einem Anhängerbremsdruckanschluss und einem Anhängerversorgungsdruckanschluss. Die Erfindung betrifft ferner einen Fahrzeugzug mit einem elektropneumatischen Anhängersteuermodul der vorstehenden Gattung.

In Fahrzeugen, insbesondere Nutzfahrzeugen, mit einem pneumatischen Bremssystem, insbesondere ausgebildet als elektronisches Bremssystem (EBS) oder Antiblockiersystem (ABS) können zum Aussteuern von Bremsdrücken von einem Steuergerät (ECU) elektropneumatische Ventile, beispielsweise Relaisventile oder Achsmodulatoren, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten.

Bei Bremssystemen für einen Fahrzeugzug weist das Bremssystem eine Anhängersteuereinheit, auch Trailer Control Valve (TCV) genannt, auf, die dazu vorgesehen ist, die von dem Zugwagen vorgegebenen Fahrzeug-Soll-Verzögerungen entsprechend auch über Anschlüsse, nämlich einen Anhängerbremsdruckanschluss und einen Anhängerversorgungsdruckanschluss, die auch als gelber und roter Kupplungskopf bezeichnet werden, pneumatisch auszusteuern. Über den Anhängerversorgungsdruckanschluss wird der Anhängerwagen mit einem Versorgungsdruck aus einem dafür vorgesehenen Vorrat des Zugwagens versorgt, während über den Anhängerbremsdruckanschluss der entsprechende Bremsdruck ausgesteuert wird.

Als ein weiteres Bauteil oder Modul weisen Bremssysteme der vorstehenden Gattung eine Feststellbremseinheit, insbesondere eine elektropneumatische Handbremse (EPH) oder eine konventionelle rein pneumatische Feststellbremseinheit, auf. Solche Feststellbremseinheiten werden üblicherweise mit sogenannten Federspeichern betrieben, also Bremseinrichtungen, die aufgrund einer Federkraft eine oder mehrere Achsen des Zufahrzeugs bremsen. Im belüfteten Zustand sind die Bremsen gelöst und im entlüfteten Zustand gebremst. In einem drucklosen Zustand wird das entsprechende Fahrzeug also gebremst. Zur Aktivierung der Feststellbremseinheit ist im Falle einer elektropneumatischen Handbremse (EPH) in der Regel in der Fahrerkabine des Zugwagens ein elektrischer Handbremsschalter vorgesehen, über den ein entsprechendes Signal an eine elektronische Steuereinheit ausgebbar ist, die dann ein oder mehrere elektropneumatische Ventile so schaltet, dass die Federspeicher entweder ent- oder belüftet werden. Bei konventionellen rein pneumatischen Feststellbremseinheiten ist in der Regel in der Fahrerkabine ein Ventil vorgesehen, über das bei entsprechender Schaltung ein Steuerdruck zum ent- oder belüften der Federspeicher aussteuerbar ist.

Die Feststellbremseinheit, also die elektropneumatische Handbremse, wird zum Parken des Fahrzeugzugs aber auch als Zusatzbremse in besonderen Situationen verwendet. Das heißt, neben dem normalen Betriebsbremsen werden die Federspeicher wenigstens teilweise entlüftet, um diese zusätzlich oder alternativ zur Bremsung zu verwenden. Um hier ein entsprechendes Bremssignal auch für den Anhängerwagen pneumatisch auszusteuern, wird in der Regel ein sogenanntes inverses Relaisventil verwendet, welches basierend auf einem sinkenden Druck in den Federspeichern einen steigenden Druck aussteuert. Solche inversen Relaisventile sind in ihrer Bauart aufwendig und weisen mehrere Steuerkolben auf, die über verschiedene Steuerflächen und verschiedene Steuerkammern miteinander interagieren. So wird z. B. bei einem reinen Hilfsbremsen ausschließlich über Federspeicher im Zugwagen und Betriebsbremsen im Anhängerwagen gebremst. Die Betriebsbremsen im Zugwagen sind beim reinen Hilfsbremsen unbetätigt. Alternativ kann auch ein Redundanzmodus umgesetzt werden, wo z. B. bei einem Kreisausfall an der Hinterachse alternativ zu den Betriebsbremsen die Federspeicher zur Hilfe genommen werden. Die Vorderachse kann weiterhin über Betriebsbremsen gebremst werden, und der Anhängerwagen ebenfalls über Betriebsbremsen.

Ferner wird bei Bremssystemen der eingangs genannten Art zwischen der sogenannten "europäischen Anhängersteuerung" und der "skandinavischen Anhängersteuerung" unterschieden. Während bei der "europäischen Anhängersteuerung" im geparkten Zustand des Fahrzeugzugs ein den entlüfteten Federspeichern entsprechender positiver Bremsdruck an dem Anhängerwagen ausgesteuert wird, um diesen zusätzlich mittels der Anhängerbetriebsbremsen zu bremsen, ist bei der "skandinavischen Anhängersteuerung" das Gegenteil der Fall: Im abgestellten Zustand des Fahrzeugzugs sollen die Betriebsbremsen des Anhängerwagens gelöst sein. Das bedeutet, bei der "europäischen Anhängersteuerung" muss im abgestellten Zustand des Fahrzeugzugs, also im stromlosen Zustand, permanent ein positiver Bremsdruck über die Anhängersteuereinheit (TCV) an die Betriebsbremsen des Anhängerwagens ausgesteuert werden.

Da in der Praxis also die Anhängersteuereinheit (TCV) und die Feststellbremseinheit (EPH) interagieren, hat sich eine Integration dieser beiden Module als wünschenswert herausgestellt. Ein erster Ansatz der Integration ist beispielsweise in DE 10 2016 003 034 A1 offenbart. Während früher die Feststellbremseinheit (EPH) häufig in eine Druckluftaufbereitungseinheit integriert wurde, schlägt DE 10 2016 003 034 A1 vor, die Feststellbremseinheit (EPH) in die Anhängersteuereinheit (TCV) zu integrieren. Dies ermögliche eine besonders einfache Integration der elektropneumatischen Komponenten in das Fahrzeug. Entsprechendes solle gelten, wenn die Steuereinrichtung zumindest teilweise in einer solchen Anhängereinrichtung integriert sei.

Auf ähnliche Weise schlägt auch DE 10 2008 014 458 A1 der hiesigen Anmelderin eine elektropneumatische Einrichtung vor, insbesondere eine Luftaufbereitungseinrichtung, einen Achsmodulator, ein Anhängersteuerventil, eine Steuereinrichtung eines elektronischen Bremssystems oder eine Fahrdynamikregelungseinrichtung, und/oder eine elektropneumatische Einrichtung des Fahrzeugs, insbesondere eine Luftaufbereitungseinrichtung oder eine Luftfederungseinrichtung mit einer darin integrierten Feststellbremsfunktion.

Eine praktische Ausführung für die "skandinavische Anhängersteuerung" ist in DE 10 2015 112 490 A1 offenbart. Dort ist ein elektropneumatisches Steuergerät nach dem Oberbegriff des Anspruchs 1 offenbart. Das Steuergerät weist eine gemeinsame Steuereinheit (ECU) sowohl für eine Feststellbremseinheit (EPH) als auch für eine Anhängersteuereinheit (TCV) auf. Konkret ist in DE 10 2015 112 490 A1 eine elektropneumatische Steuereinrichtung einer elektropneumatischen Bremsanlage einer Zugfahrzeug-Anhänger-Kombination wenigstens zum Steuern des Feststellbremsens der Zugfahrzeug-Anhänger-Kombination und des Hilfsbremsens der Zugfahrzeug-Anhänger-Kombination sowie des Betriebsbremsens wenigstens des Anhängers offenbart, mit wenigstens einem Gehäuse, in oder an welchem Folgendes angeordnet ist: a) ein pneumatischer Steuereingangsanschluss für eine zu einem pneumatischen Kanal einer Betriebsbremsbetätigungseinrichtung des Zugfahrzeugs führenden Steuerleitung, b) ein pneumatischer Versorgungsanschluss für eine zu wenigstens einem Druckluftvorrat des Zugfahrzeugs führende Versorgungsleitung, c) ein pneumatischer Steuerausgangsanschluss für eine zu einem Kupplungskopf "Bremse" des Zugfahrzeugs führende Betriebsleitung, d) ein pneumatischer Versorgungsausgangsanschluss für eine zu einem Kupplungskopf "Vorrat" des Zugfahrzeugs führende Versorgungsleitung, e) ein Feststellbremsausgangsanschluss für eine zu einem Federspeicherbremszylinder des Zugfahrzeugs führende Bremsleitung, f) ein elektrischer Feststellbremssteueranschluss für eine zu einer elektrischen Feststellbremsbetätigungseinrichtung führende Steuerleitung, g) ein elektrischer Betriebsbremssteueranschluss für eine zu einem elektrischen Kanal der Betriebsbremsbetätigungseinrichtung führende Signalleitung, h) ein erstes Relaisventil mit einem Steuereingang, einem ersten Arbeitsausgang und einem Versorgungseingang, wobei der erste Arbeitsausgang mit dem Feststellbremsausgangsanschluss und der Versorgungseingang mit dem Versorgungseingangsanschluss verbunden ist, i) ein elektronisches Steuergerät, j) eine von dem elektronischen Steuergerät gesteuerte erste elektromagnetische Einlass-/Auslass-Ventilkombination, welche den Steuereingang des ersten Relaisventils sperrt, mit einer Druckluftsenke oder mit dem pneumatischen Versorgungsanschluss verbindet, k) ein zweites Relaisventil mit einem pneumatischen Versorgungseingang, welcher mit dem Versorgungseingangsanschluss verbunden ist, einem pneumatischen Versorgungsausgang, welcher mit dem Versorgungsausgangsanschluss verbunden ist, einem zweiten Arbeitsausgang, welcher mit dem Steuerausgangsanschluss verbunden ist und mit einem ersten pneumatischen Steuereingang und einem zweiten pneumatischen Steuereingang, I) eine von dem elektronischen Steuergerät gesteuerte elektromagnetische Ventileinrichtung mit einer zweiten elektromagnetischen Einlass-/Auslass-Ventilkombination und einem elektromagnetischen Backup-Ventil, wobei das Backup-Ventil im entstromten Zustand den Steuereingangsanschluss mit dem ersten pneumatischen Steuereingang des zweiten Relaisventils verbindet und bestromt diese Verbindung sperrt und wobei die zweite elektromagnetische Einlass-/Auslass-Ventilkombination einen zweiten pneumatischen Steuereingang des zweiten Relaisventils sperrt, mit einer Druckluftsenke oder mit dem pneumatischen Versorgungseingangsanschluss verbindet, wobei m) das zweite Relaisventil zwei Steuerkolben umfasst, einen ersten Steuerkolben, welcher eine mit dem ersten pneumatischen Steuereingang in Verbindung stehende erste Steuerkammer begrenzt sowie einen zweiten Steuerkolben, welcher eine mit dem zweiten pneumatischen Steuereingang in Verbindung stehende zweite Steuerkammer begrenzt, wobei der erste Steuerkolben und der zweite Steuerkolben mit einem Doppelsitzventil zusammenwirken, welches ein Einlassventil sowie ein Auslassventil zur Be- oder Entlüftung des zweiten Arbeitsausgangs aufweist. Über eine elektromagnetische Ventileinrichtung können die beiden Steuerkolben des zweiten Relaisventils so gesteuert werden, dass einerseits mittels des ersten Steuerkolbens ein Betriebsbremsen des Anhängers sowie ein Hilfsbremsen ausgeführt wird, wenn die Federspeicher des Zugwagens zum Bremsen verwendet werden. Der zweite Steuerkolben wird für einen Redundanzfall eingesetzt, wenn der Fahrzeugführer manuell über ein Bremspedal einen Redundanzdruck aussteuert. Eine "europäische Anhängersteuerung" dergestalt, dass im unbestromten Zustand des Fahrzeugs bei entlüfteten Federspeichern der Anhänger über einen Bremsdruck mittels der Betriebsbremsen gebremst wird, ist bei der Konfiguration aus DE 10 2015 112 490 A1 nicht möglich und auch explizit nicht vorgesehen. Zudem ist die Konstruktion des Relaisventils mit zwei Steuerkolben in einem Relaisventil aufwendig.

Ferner ist aus DE 10 2012 000 435 A1 der hiesigen Anmelderin ein Feststellbremsmodul für eine "europäische Anhängersteuerung" bekannt. Das dort offenbarte Modul nutzt ein Relaisventil sowie ein erstes und ein zweites bistabiles Ventil, um den entsprechenden Bremsdruck für die Betriebsbremsen des Anhängers auch im stromlosen Zustand bei entlüfteten Federspeichern aussteuern zu können.

Darüber hinaus existieren streng modulare Ansätze, die es erlauben die Module zusammenzubringen, die für den jeweiligen Anwendungsfall benötigt werden. Ein solches System ist aus DE 10 2004 051 309 B4 bekannt. Dort ist eine aus Modulen mit elektrischen und/oder pneumatischen Komponenten aufgebaute elektropneumatische Zentraleinheit des Nutzfahrzeugs offenbart. Die Zentraleinheit kann aus einzelnen Modulen zusammengesteckt werden, um entsprechende Funktionalitäten zu erreichen. Die einzelnen Module weisen elektrische und pneumatische Anschlüsse auf, die miteinander korrespondieren.

Ein heutzutage wichtiger Aspekt ist auch die Nachrüstbarkeit einzelner Module und Komponenten oder deren Austausch. Daher ist ein integrierter Ansatz, wie er beispielsweise in DE 10 2015 112 490 A1 und auch in DE 10 2016 003 034 A1 verfolgt wird, nicht immer wünschenswert. Beispielsweise ist eine elektropneumatische Handbremseinheit bereits in einem Fahrzeug vorhanden und soll oder kann nicht ausgetauscht werden.

EP 2 615 003 A1 offenbart ein Feststellbremsmodul für eine druckmittelbetriebene Bremsanlage eines Fahrzeugs mit einer Feststellbremsfunktion und einem bistabilen Ansteuerventil zur Ansteuerung eines Anhängersteuerventils.

Daher ist es eine Aufgabe der vorliegenden Erfindung, ein elektropneumatisches Anhängersteuermodul anzugeben, bei dem die oben genannten Funktionalitäten, insbesondere in Bezug auf die "skandinavische" und die "europäische Anhängersteuerung", als auch ein Hilfsbremsen des Anhängerwagens möglich ist. Das Anhängersteuermodul soll klein im Bauraum, kostengünstig und wenig fehleranfällig sein.

Diese Aufgabe wird bei einem elektropneumatischen Anhängersteuermodul nach Anspruch 1 gelöst, wobei das elektronische Steuergerät einen Parkbremssignal-Eingang zum Aufnehmen eines elektronischen Bremsrepräsentationssignals, das die Betätigung einer Feststellbremse des Zugwagens repräsentiert, aufweist, wobei die elektronische Steuereinheit dazu eingerichtet ist, basierend auf dem Bremsrepräsentationssignal wenigstens ein Ventil des einen oder der mehreren elektropneumatischen Ventile der Anhängersteuer-Ventileinheit zu schalten, um einen Bremsdruck an dem Anhängerbremsdruckanschluss auszusteuern. Auf diese Weise lässt sich das elektropneumatische Anhängersteuermodul einfach in ein bestehendes Zugwagen eines Fahrzeugzugs einbauen. Es ist nicht erforderlich, die vorhandene elektropneumatische Handbremse oder auch die konventionelle rein pneumatische Feststellbremseinheit auszutauschen. Es ist lediglich erforderlich, eine Verbindung zwischen einem anderen Steuergerät, beispielsweise der elektropneumatischen Handbremse, einem übergeordneten Steuergerät, einem Zentralmodul oder einem anderen Peripheriegerät, welches mit der Betätigung einer Feststellbremse befasst ist bzw. ein entsprechendes Signal erhält oder sendet und dem elektropneumatischen Anhängersteuermodul der vorliegenden Erfindung in Kommunikation zu bringen.

Als Bremsrepräsentationssignal wird vorliegend ein Signal verstanden, das ein tatsächliches Bremsen mittels der Feststellbremsen bzw. Parkbremsen oder eine Bremsanforderung für die Feststellbremsen bzw. Parkbremsen repräsentiert. Ein solches Bremsrepräsentationssignal kann direkt von einem weiteren Steuergerät, beispielsweise einem Zentralmodul (etwa über CAN-Bus), oder einen Handbremsschalter (etwa über LIN-Bus) bereitgestellt werden. In einer Variante kann es auch ein elektronisches Signal eines Drucksensors sein, der einen Bremsdruck erfasst. Der Drucksensor kann intern, das heißt innerhalb des elektropneumatischen Anhängersteuermoduls, angeordnet sein oder extern zu diesem.

Der Parkbremssignal-Eingang ist vorzugsweise an der elektronischen Steuereinheit (ECU) ausgebildet.

Aufgrund der besonderen Gestaltung der elektronischen Steuereinheit mit dem Parkbremssignal-Eingang ist das elektropneumatische Anhängersteuermodul der vorliegenden Erfindung dazu in der Lage, sowohl ein Hilfsbremsen mittels der Betriebsbremsen des Anhängerwagens für den Fall auszuführen, dass die Feststellbremsen des Zugwagens als Hilfsbremse verwendet werden, als auch ein Parkbremsen mittels der Betriebsbremsen, wenn eine europäische Anhängersteuerung umgesetzt wird. Das elektropneumatische Anhängersteuermodul der vorliegenden Erfindung ist also dazu in der Lage, ein einfaches Nachrüsten dieser Funktionalitäten zu erlauben, ohne zu stark in den bestehenden Zugwagen einzugreifen.

Gemäß einer ersten bevorzugten Ausführungsform weist die Anhängersteuer-Ventileinheit wenigstens ein Einlassventil mit einem ersten Einlassventilanschluss und einem zweiten Einlassventilanschluss auf, wobei der erste Einlassventilanschluss mit dem Vorratseingang verbunden ist und die elektronische Steuereinheit dazu eingerichtet ist, basierend auf dem Bremsrepräsentationssignal das Einlassventil zu schalten, um einen Bremsdruck an dem Anhängerbremsdruckanschluss auszusteuern. Das Einlassventil kann beispielsweise als 2/2-Wegeventil ausgebildet sein mit einem ersten und einem zweiten Schaltzustand, wobei das Einlassventil vorzugsweise stromlos im ersten Schaltzustand verbleibt. In einer Alternative kann das Einlassventil auch als 3/2-Wegeventil ausgebildet sein und somit gleichzeitig eine weitere Funktionalität, wie beispielsweise ein Entlüften, ausüben.

In einer weiteren bevorzugten Ausführungsform ist die elektronische Steuereinheit dazu eingerichtet das Bremsrepräsentationssignal von einer weiteren Steuereinheit zu empfangen. Diese weitere Steuereinheit ist nicht die elektronische Steuereinheit (ECU) des elektropneumatischen Anhängersteuermoduls. In einer ersten Alternative ist die weitere Steuereinheit eine elektronische Steuereinheit einer Feststellbremseinheit. In einer zweiten Alternative ist die weitere Steuereinheit ein Zentralmodul.

Das Zentralmodul ist dasjenige Modul, das zentral das Bremssystem steuert und welches üblicherweise ein entsprechendes Betriebsbremssignal an die eine oder die mehreren Betriebsbremsen des Zugwagens bereitstellt. Das Zentralmodul stellt darüber hinaus üblicherweise eine Hilfsbremsanforderung bereit, für den Fall, dass die Feststellbremsen zum Hilfsbremsen eingesetzt werden sollen. Daher ist es eine besonders einfache Lösung, wenn die elektronische Steuereinheit dazu eingerichtet ist, das Bremsrepräsentationssignal von dem Zentralmodul zu empfangen. Vorzugsweise ist ein Betriebsbremssignal-Eingang und/oder der Parkbremssignal-Eingang dazu mit einem entsprechenden Ausgang des Zentralmoduls verbunden. Das von dem Zentralmodul bereitgestellte Bremsrepräsentationssignal ist in diesem Fall ein elektronisches Signal und kann dasselbe Signal sein, welches zum Hilfsbremsen an die Feststellbremsen bzw. die elektropneumatische Feststellbremseinheit des Zugwagens gesendet wird, oder ein entsprechendes oder ein abgeleitetes Signal. Es kann auch vorgesehen sein, dass das Zentralmodul ein separates, eigens für den Anhängerwagen vorgesehenes Bremssignal sendet, welches in diesem Fall dann das Bremsrepräsentationssignal bildet.

Die Feststellbremseinheit steuert die Feststellbremsen, die insbesondere Federspeicher umfassen. Die Feststellbremseinheit stellt in einer Alternative das Bremsrepräsentationssignal an dem Parkbremssignal-Eingang des elektropneumatischen Anhängersteuermoduls bereit. Diese Ausführungsform ist insbesondere dann bevorzugt, wenn in dem Bremssystem eine Rückfallebene für den Fall des Ausfalls des Zentralmoduls geschaffen werden soll. In diesem Fall ist es gemäß dieser Ausführungsform möglich, den Anhänger in Abhängigkeit der Feststellbremsen zu bremsen.

Erfindungsgemäß ist der Parkbremssignal-Eingang dazu ausgebildet, mit einem Drucksensor verbunden zu werden, wobei die elektronische Steuereinheit dazu eingerichtet ist, das elektronische Bremsrepräsentationssignal von diesem Drucksensor zu empfangen. In diesem Fall bildet das elektronische Drucksignal, das von dem Drucksensor bereitgestellt wird, das Bremsrepräsentationssignal. Der Drucksensor ist vorzugsweise dazu eingerichtet, einen Bremsdruck von wenigstens einer Feststellbremse zu erfassen, vorzugsweise einen Druck in einem Zylinder eines Federspeichers des Zugwagens. Alternativ ist der Drucksensor dazu eingerichtet, einen Druck einer Vorsteuereinheit einer elektropneumatischen Handbremseinheit (EPH) oder einer konventionellen rein pneumatischen Feststellbremseinheit des Zugwagens zu erfassen, insbesondere einen Steuerdruck, der zur Aussteuerung eines Bremsdrucks an der wenigstens einen Feststellbremse, insbesondere dem Federspeicher, dient. Bei einer konventionellen rein pneumatischen Feststellbremseinheit mit europäischer Anhängeransteuerung kann auch ein pneumatischer Anhängerparkbremsdruck durch den Drucksensor erfasst werden.

Gemäß einer bevorzugten Variante weist das elektropneumatische Anhängersteuermodul einen Parkbremsdruckeingang zum Empfang eines Drucks einer pneumatischen Feststellbremse des Zugwagens auf. Hierbei ist besonders bevorzugt, dass das elektropneumatische Anhängersteuermodul den Drucksensor aufweist, wobei der Drucksensor den Druck an dem Parkbremsdruckeingang des Anhängersteuermoduls erfasst und mit dem Parkbremssignal-Eingang verbunden ist, um ein elektronisches Drucksignal als Bremsrepräsentationssignal an dem Steuergerät bereitzustellen. Auf diese Weise lässt sich das elektropneumatische Anhängersteuermodul noch einfacher in einen Zugwagen integrieren. Es ist nicht erforderlich, dass das elektropneumatische Anhängersteuermodul durch eine elektrische Signalleitung mit einer übergeordneten Einheit, beispielsweise dem Zentralmodul, verbunden ist und diese übergeordnete Steuereinheit dazu in der Lage ist, ein elektronisches Bremsrepräsentationssignal bereitzustellen. Vielmehr ist es ausreichend, eine pneumatische Leitung von einer Feststellbremse oder einer der Feststellbremse vorgeschalteten Vorsteuereinheit zu dem elektropneumatischen Anhängersteuermodul zu führen, sodass der Druck an dem Parkbremsdruckeingang mittels des internen Drucksensors des Anhängersteuermoduls erfasst werden kann.

Erfindungsgemäß weist das Anhängersteuermodul eine Parkbremsventileinheit mit einem pneumatisch gesteuerten Schaltventil auf, welches einen pneumatischen Steuereingang zum Aufnehmen eines pneumatischen Steuerdrucks aufweist, wobei das pneumatisch gesteuerte Schaltventil bei Entlüftung des Parkbremsdruckeingangs so geschaltet wird, dass ein Bremsdruck an dem Anhängerbremsdruckanschluss aussteuerbar ist. Die Parkbremsventileinheit dient also dazu, bei Entlüftung der Federspeicher, also bei Einlegen der Feststellbremsen, einen korrespondierenden Bremsdruck an dem Anhängerbremsdruckanschluss auszusteuern, um die Betriebsbremsen des Anhängerwagens einzubremsen. Dies ist insbesondere für die sogenannte "europäische Anhängersteuerung" von Vorteil, um in einem geparkten Zustand des Zugwagens stromlos nur auf Basis eines pneumatischen Steuerdrucks den Anhängerwagen zu bremsen.

Dementsprechend ist der pneumatische Steuerdruck in einer ersten Ausführungsform der Druck an dem Federspeicher-Anschluss. Solange also die Federspeicher gelöst sind und Zylinder der Federspeicher belüftet sind, ist das pneumatisch gesteuerte Schaltventil in der zweiten Schaltstellung, und wenn der Federspeicher-Anschluss mit einer Drucksenke verbunden ist und die Federspeicher entlüftet sind, wird das pneumatisch gesteuerte Schaltventil aufgrund der Federbelastung in die zweite Schaltstellung verbracht.

Alternativ ist es in einer weiteren Ausführungsform möglich, dass der pneumatische Steuerdruck ein Feststellbrems-Steuerdruck in einer vorgeschalteten Vorsteuereinheit der Feststellbremseinheit ist. Es kann also ebenso ein dem Druck an dem Federspeicher-Anschluss entsprechender bzw. äquivalenter Druck verwendet werden, wie insbesondere ein Steuerdruck für die Feststellbremsen. Zum Beispiel ist es möglich, den Steuerdruck an einem Relaisventil der Feststellbremseinheit, sowohl einer elektropneumatischen Handbremse (EPH) als auch einer konventionellen rein pneumatischen Feststellbremseinheit, zu verwenden. Bei einer konventionellen rein pneumatischen Feststellbremseinheit mit europäischer Anhängeransteuerung kann es auch ein pneumatischer Anhängerparkbremsdruck sein. Es ist also möglich, sowohl den Arbeitsdruck, der tatsächlich an wenigstens einem der Federspeicher anliegt, als Steuerdruck für das pneumatisch gesteuerte Schaltventil zu verwenden, als auch einen den Arbeitsdruck der Federspeicher aussteuernden Steuerdruck.

In einer weiteren bevorzugten Ausführungsform weist das elektropneumatische Steuergerät einen Redundanzdruckanschluss mit einer ersten Redundanzdruckleitung zum Anschluss eines Bremswertgebers oder des Brems- oder Steuerdrucks einer der anderen Fahrzeugachsen, über den z. B. durch Betätigung eines Bremspedals ein pneumatischer Bremsdruck am Anhängerbremsdruckanschluss aussteuerbar ist. Der Bremswertgeber kann rein pneumatisch, elektropneumatisch oder auf sonstige Weise ausgebildet sein. Der Redundanzdruckanschluss dient dazu, eine Fahrzeug-Soll-Verzögerung eines Fahrzeugführers zu empfangen, die dieser mittels des Bremswertgebers manuell einsteuert. Der Fahrzeugführer kann so in einem Fehlerfall, z. B. bei Ausfall der Versorgungsspannung rein pneumatisch einen Bremsdruck aussteuern. Alternativ wird an dem Redundanzdruckanschluss ein Brems- oder Steuerdruck einer anderen Fahrzeugachse, z. B. der Vorderachse, ausgesteuert. Hierdurch kann dann im Fehlerfall der Anhängerwagen in Übereinstimmung mit der anderen Achse gebremst werden.

In einer bevorzugten Ausführungsform ist vorgesehen, dass das pneumatisch gesteuerte Schaltventil mit einem Auslass mit einer zweiten Redundanzdruckleitung verbunden ist, mit welcher auch die erste Redundanzdruckleitung verbindbar ist, sodass bei Schalten des pneumatisch gesteuerten Schaltventils ein Druck in die zweite Redundanzdruckleitung aussteuerbar ist. Vorzugsweise ist folglich durch Schalten des pneumatisch gesteuerten Schaltventils ein pneumatischer Bremsdruck am Anhängerbremsdruckanschluss aussteuerbar. In der Redundanzdruckleitung ist vorzugsweise ein Redundanzventil angeordnet, welches beispielsweise als 2/2-Wegeventil ausgebildet sein kann. Das Redundanzventil wird dazu verwendet den Redundanzdruck im üblichen Fahrbetrieb auszusperren. Indem das pneumatisch gesteuerte Schaltventil den Druck in die zweite Redundanzdruckleitung aussteuert, kann das (nachgeschaltete) Redundanzventil dazu eingesetzt werden den von dem pneumatisch gesteuerten Schaltventil ausgesteuerten Druck auszusperren. Hierdurch ist es möglich eine "Anhängerkontrollstellung" auszuführen, wie dies weiter unten noch genauer beschrieben werden wird. Weiterhin wird hierdurch die Bauweise und das Layout weiter vereinfacht, da nur eine Leitung, nämlich die zweite Redundanzdruckleitung, verwendet wird, um sowohl den Redundanzdruck als auch den Druck aus dem pneumatisch gesteuerten Schaltventil (Parkbremsdruck) auszusteuern. Es hat sich gezeigt, dass dies möglich ist, da der Redundanzdruck nur dann ausgesteuert wird, wenn der Fahrzeugzug im Betrieb ist, der Parkbremsdruck aber nur dann, wenn der Fahrzeugzug geparkt wird. Hierdurch werden Bauteile eingespart, und der Aufbau kann kompakter gestaltet werden.

Weiterhin ist bevorzugt, dass das pneumatisch gesteuerte Schaltventil als 3/2-Wegeventil mit einem ersten, einem zweiten und einem dritten Anschluss ausgebildet ist. Der dritte Anschluss ist vorzugsweise wie oben beschrieben mit der zweiten Redundanzdruckleitung verbunden und als Auslass ausgebildet.

In einer bevorzugten Variante ist der erste Anschluss des 3/2-Wegeventils mit dem Redundanzdruckanschluss und der zweite Anschluss des 3/2-Wegeventils mit dem Vorratseingang verbunden. Das 3/2-Wegeventil schaltet also in dieser Variante zwischen dem Redundanzdruckanschluss und dem Vorratseingang abhängig von dem pneumatischen Steuerdruck am Steuereingang hin und her und steuert diesen Druck in die zweite Redundanzdruckleitung aus. Der erste Anschluss des 3/2-Wegeventils ist vorzugsweise über die erste Redundanzdruckleitung mit dem Redundanzdruckanschluss verbunden. Werden folglich die Federspeicher entlüftet, schaltet das 3/2-Wegeventil aufgrund des sinkenden Steuerdrucks an dem Steuereingang auf die erste Schaltstellung, sodass der Vorratseingang mit der zweiten Redundanzdruckleitung verbunden ist. Im Fall der Entlüftung der Federspeicher ist somit das Aussteuern eines manuell eingegebenen Redundanzdrucks nicht möglich; der Redundanzdruckanschluss ist mit dem ersten Anschluss des 3/2-Wegeventils verbunden, der in diesem Schaltzustand gesperrt ist.

In einer zweiten Variante ist der erste Anschluss des pneumatisch gesteuerten 3/2-Wegeventils mit einer Drucksenke verbunden. In dieser Variante schaltet das 3/2-Wegeventil zwischen dem Vorratseingang und der Drucksenke hin und her, sodass die zweite Redundanzdruckleitung, die mit dem dritten Anschluss des pneumatisch gesteuerten 3/2-Wegeventils verbunden ist, bei entsprechender Schaltstellung des 3/2-Wegeventils entlüftbar ist. Der Redundanzdruckanschluss kann in dieser Variante über ein zweites Ventil, beispielsweise ein 2/2-Wegeventil, mit der zweiten Redundanzdruckleitung verbunden sein.

Besonders bevorzugt ist, dass der dritte Anschluss des pneumatisch gesteuerten 3/2-Wegeventils mit einem ersten Wechselventileingang eines Wechselventils verbunden ist, ein zweiter Wechselventileingang des Wechselventils mit dem Redundanzdruckanschluss verbunden ist und ein Wechselventilausgang des Wechselventils mit der zweiten Redundanzdruckleitung verbunden ist. Das Wechselventil ist vorzugsweise als sogenanntes Select-High-Ventil ausgebildet mit einem doppelwirkenden Rückschlagventil. Dies bedeutet, an dem Wechselventilausgang wird stets der höhere Druck, der an dem ersten und zweiten Wechselventileingang anliegt, ausgesteuert. In dieser Variante ist es möglich, trotz eingelegter oder teilweise eingelegter Parkbremse, wenn diese beispielsweise als Hilfsbremse verwendet wird, einen Redundanzdruck manuell auszusteuern und den Druck, der durch das pneumatisch gesteuerte 3/2-Wegeventil ausgesteuert wird, über das Wechselventil zu übersteuern. Hierdurch ist es möglich, auf ein weiteres 2/2-Wegeventil oder ein anderes Layout zu verzichten. Ein Wechselventil ist ein relativ kleines Bauteil, welches vorzugsweise mit dem pneumatisch gesteuerten 3/2-Wegeventil integriert ist.

In einer bevorzugten Weiterbildung ist vorgesehen, dass zwischen einem Auslass des pneumatisch gesteuerten Schaltventils und dem Anhängerbremsdruckanschluss ein elektronisches Schaltventil angeordnet ist, sodass bei Verbinden des Federspeicher-Anschlusses mit der Drucksenke ein Aussteuern eines Bremsdrucks an dem Anhängerbremsdruckanschluss unterbunden werden kann. Das elektronische Schaltventil ist vorzugsweise als 3/2-Wegeventil oder 2/2-Wegeventil ausgebildet. Es ist vorzugsweise in einer stromlosen Stellung offen. Durch das elektronische Schaltventil lässt sich der Auslass des pneumatisch gesteuerten Schaltventils sperren. Ist der Auslass gesperrt, wird kein Bremsdruck an dem Anhängerbremsdruckanschluss ausgesteuert. Der Auslass des pneumatisch gesteuerten Schaltventils ist vorzugsweise der dritte Anschluss des pneumatisch gesteuerten 3/2-Wegeventils, wenn das pneumatisch gesteuerte Schaltventil als 3/2-Wegeventil ausgebildet ist.

Die vorstehende Variante ist besonders dann bevorzugt, wenn die Ausführung einer sogenannten "Anhängerkontrollstellung" gewünscht ist. Eine Anhängerkontrollstellung dient dazu zu prüfen, ob der Fahrzeugzug auch ohne eingelegte Betriebsbremsen in dem Anhängerwagen allein durch die Federspeicher im Zugwagen steht. Ist beispielsweise der Fahrzeugzug an einer Stelle mit leichtem Gefälle abgestellt, soll der Fahrer eine Anhängerkontrollstellung einlegen können, um dies zu prüfen. Dies dient der Sicherheit, falls aufgrund einer Leckage die Bremskraft der Betriebsbremsen über die Zeit nachlässt, wenn der Fahrzeugzug über längere Zeit abgestellt ist. Zur Einlegung der "Anhängerkontrollstellung" betätigt der Fahrer im Falle einer elektropneumatischen Handbremse (EPH) vorzugsweise einen entsprechenden Schalter, der über die Steuereinheit (ECU) veranlasst, dass das elektronische Schaltventil geschaltet wird und den Auslass des pneumatisch gesteuerten Schaltventils sperrt. Nach einer vorbestimmten Zeit wird das elektronische Schaltventil wieder freigegeben und in die offene Stellung geschaltet, vorzugsweise stromlos, sodass dann an dem Anhängerbremsdruckanschluss ein Bremsdruck ausgesteuert wird, der zum Einlegen der Betriebsbremsen des Anhängers verwendet werden kann. Auf ähnliche Weise kann dies bei einer konventionellen rein pneumatischen Feststellbremseinheit gelöst werden. Hierbei kann einerseits ein elektrischer Schalter für die Anhängerkontrollstellung vorgesehen sein, oder das Parkbremsventil zur Betätigung der Feststellbremse in der Fahrerkabine weist eine dritte Schaltstellung für die Anhängerkontrollstellung auf. Das Parkbremsventil ist dazu ausgebildet zwei verschiedene Steuerdrücke auszusteuern: 1.) den Steuerdruck für die Federspeicher und 2.) den Steuerdruck für den Anhänger bzw. die Anhängersteuereinheit (TCV). In der dritten Schaltstellung des Parkbremsventils für die Anhängerkontrollstellung wird als Steuerdruck für die Federspeicher Umgebungsdruck ausgesteuert, und als Steuerdruck für den Anhänger bzw. die Anhängersteuereinheit (TCV) wird Vorratsdruck ausgesteuert. Hierdurch werden die Federspeicher zugespannt, während der Anhänger ungebremst bleibt (der Steuerdruck für den Anhänger wird in der Anhängersteuereinheit invertiert). Wird das Parkbremsventil nun in die Parkstellung gebracht, wird für die Anhängersteuereinheit derselbe Steuerdruck ausgesteuert, der auch für die Federspeicher ausgesteuert wird, in diesem Fall also Umgebungsdruck.

Eine bevorzugte Ausgestaltung sieht vor, dass die Anhängersteuereinheit ein Relaisventil aufweist, welches einen mit dem Vorratseingang verbundenen Relaisventil-Arbeitseingang, einen mit dem Anhängerbremsdruckanschluss verbundenen Relaisventil-Ausgang, einen Relaisventil-Entlüftungsausgang, über den der Relaisventil-Ausgang mit einer Drucksenke verbindbar ist, und einen Relaisventil-Steuereingang aufweist, der in eine gemeinsame innere Steuerkammer mündet, wobei der Relaisventil-Steuereingang über die Anhängersteuer-Ventileinheit mit dem Vorratseingang und/oder einer Drucksenke verbindbar ist, um einen Bremsdruck am Anhängerbremsdruckanschluss auszusteuern, wobei in die gemeinsame Steuerkammer sowohl ein Betriebsbrems-Steuerdruck, als auch ein Redundanzdruck aussteuerbar sind. Vorzugsweise weist das Relaisventil eine einzige Steuerkammer auf. Die Anhängersteuer-Ventileinheit weist dazu vorzugsweise ein Einlassventil und ein Auslassventil auf, wobei der Relaisventil-Steuereingang mittels des Einlassventils mit dem Vorratseingang verbindbar ist und mittels des Auslassventils mit der Drucksenke verbindbar ist. Einlass- und Auslassventil können jeweils als 2/2-Wegeventil ausgebildet sein, oder sie sind gemeinsam als 3/2-Wegeventil integriert. Durch diesen Aufbau wird ein besonders einfaches Relaisventil verwendet, welches nur eine einzige Steuerkammer aufweist. Es kann vorgesehen sein, dass mehrere Eingänge in diese Steuerkammer münden. Bevorzugt ist aber nur ein einziger Relaisventil-Steuereingang vorgesehen.

Vorzugsweise ist die gemeinsame Steuerkammer des Relaisventils durch einen einzigen Steuerkolben begrenzt ist. Vorzugsweise weist das Relaisventil auch nur einen einzigen Steuerkolben auf. Hierdurch ist die Bauweise weiter vereinfacht, und Kosten werden reduziert.

In einer bevorzugten Weiterbildung ist die Steuerkammer über ein elektronisch schaltbares Einlassventil mit dem Vorratseingang verbindbar. Vorzugsweise ist die Steuerkammer mit der zweiten Redundanzdruckleitung verbindbar. Hierzu ist es möglich, dass ein weiteres Ventil, beispielsweise ein elektronisch schaltbare 2/2-Wegeventil, vorgesehen ist. Varianten umfassen aber auch ein einfaches T-Stück, einen zweiten Relaisventil-Steuereingang, der in dieselbe Steuerkammer mündet, ein 3/2-Wegeventil oder ein Select-High-Ventil.

In einer Variante ist die Steuerkammer mit der ersten Redundanzdruckleitung verbunden. Vorzugsweise ist der Relaisventilsteuereingang mit der ersten Redundanzdruckleitung verbunden. Es kann vorgesehen sein, dass zwischen der ersten Redundanzdruckleitung und dem Relaisventilsteuereingang ein 2/2-Wegeventil vorgesehen ist, um den Redundanzdruck im normalen Fahrbetrieb aussperren zu können.

Gemäß einer weiteren bevorzugten Ausführungsform weist das elektropneumatische Anhängersteuermodul einen Eingang an der elektronischen Steuereinheit für ein Anhängerkontrollstellungs-Signal auf. Wie bereits weiter oben beschrieben ist bei der "europäischen Anhängersteuerung" bevorzugt, dass das Anhängersteuermodul dazu in der Lage ist, eine Anhängerkontrollstellung auszuführen. In dieser Anhängerkontrollstellung werden bei der "europäischen Anhängersteuerung" die Feststellbremsen des Zugwagens eingelegt, aber gleichzeitig die Aussteuerung eines Bremsdrucks für die Betriebsbremsen des Anhängerwagens gesperrt. Hierdurch soll geprüft werden, ob der Fahrzeugzug auch ausschließlich anhand der Feststellbremsen des Zugwagens sicher steht. Um eine solche Funktion auszuführen, ist in der Fahrerkabine des Zugwagens im Falle einer elektropneumatischen Handbremse vorzugsweise ein Schalter vorgesehen, insbesondere elektrischer Schalter, der durch den Fahrzeugführer betätigt wird. Dieser Schalter kann in den Handbremsschalter integriert sein. Das elektropneumatische Anhängersteuermodul weist gemäß dieser Ausführungsform daher vorzugsweise einen Eingang für ein Anhängerkontrollstellungs-Signal auf, welches von dem Anhängerkontrollstellungsschalter oder einer weiteren Einheit bereitgestellt wird. Die Steuereinheit ist dazu ausgebildet, basierend auf dem Anhängerkontrollstellungs-Signal wenigstens ein Ventil zu schalten, sodass die Aussteuerung eines Bremsdrucks an dem Anhängerbremsdruckanschluss gesperrt ist. Diese Ausführungsform der Erfindung eignet sich insbesondere dann, wenn der Zugwagen über eine elektropneumatische Handbremse (EPH) verfügt, da in diesem Fall das Signal für die Anhängerkontrollstellung elektronisch übermittelt werden kann. Im Falle einer konventionellen rein pneumatischen Feststellbremseinheit wird in der Regel kein elektronisches Signal für die Anhängerkontrollstellung übermittelt, sondern ausschließlich ein pneumatischer Steuerdruck, welcher ebenfalls dem elektropneumatischen Anhängersteuermodul zugeführt wird.

Bei Systemen mit elektropneumatischer Handbremse ist die elektronische Steuereinheit des Anhängersteuermoduls vorzugsweise dazu eingerichtet, das Anhängerkontrollstellungs-Signal digital, analog und/oder über einen CAN-Bus zu empfangen. Das heißt, einerseits ist es denkbar, dass der Eingang für das Anhängerkontrollstellungssignal direkt mit einem entsprechenden Schalter verbunden ist, oder der Eingang ist über eine CAN-Bus-Leitung mit einem Steuergerät, insbesondere dem Steuergerät der elektropneumatischen Handbremse oder in Varianten auch dem Zentralmodul, verbunden und empfängt von diesem das Anhängerkontrollstellungs-Signal. Üblicherweise wird über einen Parkbremsaktuator, beispielsweise einen elektrischen Handbremsschalter im Falle einer elektropneumatischen Handbremse, von dem Fahrer ein Modus angefordert, in dem die Feststellbremsen, insbesondere Federspeicher, eingelegt werden bzw. bleiben und die Betriebsbremse des Anhängerwagens gelöst werden ("Anhängerkontrollstellung"). In konventionellen Parkbremssystemen wird dies pneumatisch im Parkbremsventil über die zusätzliche Schaltstellung realisiert. Bei elektropneumatischen Parkbremssystemen, wie sie in diese Ausführungsform bevorzugt sind, ist dieser Modus ("Anhängerkontrollstellung") in der Regel durch eine zusätzliche Schaltstellung des Parkbremsaktuators, insbesondere Handbremsschalters, realisiert. Das Anhängerkontrollstellungs-Signal kann also direkt von dem Schalter kommen oder auch von einem Sensor, der einen Parkbremsdruck erfasst. Es kann ebenso vorgesehen sein, dass ein Sensor den Steuerdruck des Parkbremsventils in einer konventionellen rein pneumatischen Feststellbremseinheit erfasst und so ein elektronisches Anhängerkontrollstellungssignal bereitstellt.

In einer bevorzugten Weiterbildung ist die elektronische Steuereinheit des elektropneumatischen Anhängersteuermoduls dazu eingerichtet, den Bremsdruck für die Betriebsbremsen des Anhängerwagens nach Betätigung der Feststellbremsen für eine vorbestimmte Zeitdauer abzusperren. So wird eine Anhängerkontrollstellung "erzwungen". Das Einlegen der Betriebsbremsen des Anhängerwagens erfolgt erst nach Ablauf der vorbestimmten Zeitdauer. Beispielsweise kann diese Zeitdauer drei Minuten betragen. Nach Betätigung eines Handbremsschalters durch den Fahrer werden also folglich zunächst die Feststellbremsen aktiviert, insbesondere die Federspeicher entlüftet und nach Ablauf der vorbestimmten Zeitdauer zusätzlich ein Parkbremsdruck an dem Anhängerbremsdruckanschluss ausgesteuert, um die Betriebsbremsen des Anhängerwagens einzubremsen.

In einer weiteren bevorzugten Ausführungsform weist das elektropneumatische Anhängersteuermodul einen Anschluss zum Empfang eines redundanten elektronischen Bremsrepräsentationssignals auf, wobei das Anhängersteuermodul dazu eingerichtet ist, in Abhängigkeit des empfangenen redundanten elektronischen Bremsrepräsentationssignals wenigstens ein Ventil der Anhängersteuer-Ventileinheit so zu schalten, dass ein entsprechender Bremsdruck an dem Anhängerbremsdruckanschluss ausgesteuert wird. Das redundante elektronische Bremsrepräsentationssignal wird beispielsweise von einem manuell betätigten Bremswertgeber bereitgestellt. Im üblichen Betrieb wird ein elektronisches Bremssignal von einem weiteren Steuergerät, zum Beispiel einem Zentralmodul, bereitgestellt. Für den Fall, dass dieses weitere Steuergerät ausfällt, ist das elektropneumatische Anhängersteuermodul gemäß dieser Ausführungsform dazu eingerichtet, ein redundantes elektronisches Bremsrepräsentationssignal zu empfangen und dieses zu verwenden. Das redundante elektronische Bremsrepräsentationssignal wird vorzugsweise von einer elektronischen Steuereinheit der Feststellbremseinheit (EPH) bereitgestellt, die vorzugsweise im Fehlerfall die Ansteuerung wenigstens der Feststellbremsen zur redundanten Bremsung des Zugwagens ansteuert. Hierdurch ist es möglich, den Anhänger in Übereinstimmung mit der von der Feststellbremseinheit veranlassten Bremsung einzubremsen.

Hierbei ist vorzugsweise vorgesehen, dass das elektropneumatische Anhängersteuermodul einen redundanten Drucksensor aufweist, der an der ersten und/oder zweiten Redundanzdruckleitung und/oder dem Redundanzdruckanschluss angeordnet ist und dazu ausgebildet ist, den pneumatischen Redundanzdruck an dem Redundanzdruckanschluss oder in der ersten Redundanzdruckleitung zu erfassen und ein entsprechendes Redundanzdrucksignal als das redundante elektronische Bremsrepräsentationssignal an der Steuereinheit bereitzustellen. Das von dem redundanten Drucksensor bereitgestellte Redundanzdrucksignal repräsentiert einen Fahrerwunsch, da der Drucksensor den manuell mittels des Bremswertgebers ausgesteuerten Redundanzdruck erfasst. Die Steuereinheit ist vorzugsweise dazu eingerichtet das Bremsrepräsentationssignal, das sie vom Drucksensor als Redundanzdrucksignal empfängt, mit einem Betriebs-Bremssignal zu vergleichen, das die von dem Zentralmodul oder einer weiteren Steuereinheit (z. B. Steuereinheit für autonomes Fahren) empfängt. Für den Fall, dass das Bremsrepräsentationssignal eine höhere Verzögerungsanforderung repräsentiert als das von einer weiteren Steuereinheit empfangene Betriebs-Bremssignal, veranlasst die Steuereinheit das Schalten wenigstens eines Ventils der Anhängersteuer-Ventileinheit, um basierend auf dem Redundanzdruck die Aussteuerung eines Bremsdrucks am Anhängerbremsdruckanschluss zu ermöglichen. Mit anderen Worten, für den Fall, dass der Fahrer eine stärkere Verzögerung fordert als die weitere Steuereinheit, wird die weitere Steuereinheit ausgesperrt und der Fahrer übernimmt manuell. Auch in diesem Fall kann die Ansteuerung des elektropneumatischen Anhängersteuermoduls über die Feststellbremseinheit mittels des redundanten elektronischen Bremsrepräsentationssignals erfolgen.

Gemäß einem zweiten Aspekt der Erfindung wird die eingangs genannte Aufgabe durch einen Zugwagen gelöst, der ein elektropneumatisches Anhängersteuermodul nach einer der vorstehend beschriebenen bevorzugten Ausführungsformen eines elektropneumatischen Anhängersteuermoduls gemäß dem ersten Aspekt der Erfindung aufweist. Bezüglich der Ausgestaltungen der Ausführungsbeispiele sowie deren Vorteile wird vollumfänglich auf die obige Beschreibung Bezug genommen.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein schematisches Gesamtlayout eines Bremssystems für einen Fahrzeugzug mit einem erfindungsgemäßen elektropneumatischen Anhängersteuermodul;
- Fig. 2: ein erstes Ausführungsbeispiel eines elektropneumatischen Anhängersteuermoduls;
- Fig. 3: ein zweites Ausführungsbeispiel des elektropneumatischen Anhängersteuermoduls;
- Fig. 4: ein drittes Ausführungsbeispiel des elektropneumatischen Anhängersteuermoduls;
- Fig. 5: ein viertes Ausführungsbeispiel des elektropneumatischen Anhängersteuermodul gemäß der Erfindung;
- Fig. 6: ein fünftes Ausführungsbeispiel des elektropneumatischen Anhängersteuermodul gemäß der Erfindung;
- Fig. 7: ein sechstes Ausführungsbeispiel des elektropneumatischen Anhängersteuermodul gemäß der Erfindung;
- Fig. 8: ein siebtes Ausführungsbeispiel des elektropneumatischen Anhängersteuermoduls;
- Fig. 9: ein achtes Ausführungsbeispiel des elektropneumatischen Anhängersteuermoduls;
- Fig. 10: ein neuntes Ausführungsbeispiel des elektropneumatischen Anhängersteuermoduls;
- Fig. 11: ein zehntes Ausführungsbeispiel des elektropneumatischen Anhängersteuermoduls;
- Fig. 12: eine Variante der Anhängersteuer-Ventileinheit;
- Fig. 13: eine weitere Variante der Anhängersteuer-Ventileinheit;
- Fig. 14: eine schematische Darstellung eines Relaisventils; und
- Fig. 15: ein schematisches Gesamtlayout eines Bremssystems für einen Fahrzeugzug mit einem erfindungsgemäßen elektropneumatischen Anhängersteuermoduls gemäß einem elften Ausführungsbeispiel.

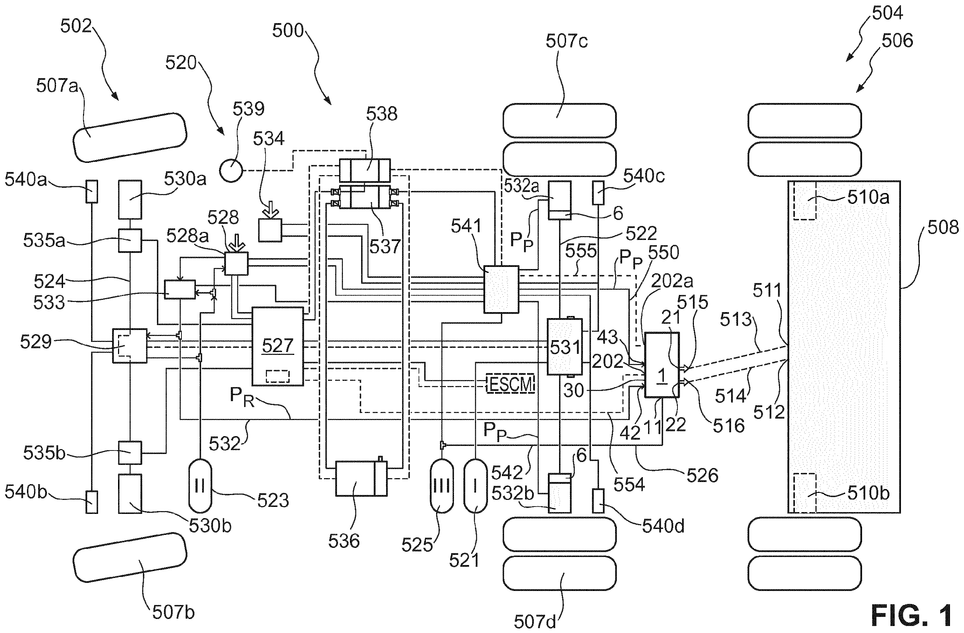

Fig. 1 illustriert zunächst den Gesamtaufbau anhand eines Fahrzeugzugs 500, der einen Zugwagen 502 und einen Anhängerwagen 504 umfasst. Der Anhängerwagen 504 ist hier nur schematisch gezeigt, nämlich nur eine Achse 506 des Anhängerwagens 504. Der Anhängerwagen 504 weist ein nur schematisch dargestelltes Anhänger-Betriebsbremssystem 508 auf, das über entsprechende Anschlüsse 511, 512 und pneumatische Leitungen 513, 514 mit entsprechenden Anschlüssen 515, 516 an dem Zugwagen 502 verbindbar ist. Über den Anschluss 515 ist der Anhängerwagen 504 mit einem Vorrat 525 verbindbar, und über den Anschluss 516 wird ein Bremsdruck weitergegeben. Das Anhänger-Betriebsbremssystem 508 weist schematisch dargestellte Betriebsbremsen 510a, 510b auf.

Der Zugwagen 502 weist ein Bremssystem 520 auf, welches einen ersten Druckluftvorrat 521 für einen Hinterachsbremskreislauf 522, einen zweiten Druckluftvorrat 523 für einen Vorderachsbremskreislauf 524 und einen dritten Druckluftvorrat 525 für einen Anhängerbremskreislauf 542.

Als zentrale und übergeordnete Steuereinheit ist ein Zentralmodul 527 vorgesehen, welches rein elektrisch arbeitet. Es ist mit einem elektropneumatischen Bremswertgeber (BST) 528 verbunden und steuert das Betriebsbremsen während der Fahrt. Dazu ist das Zentralmodul 527 mit einem Vorderachsmodulator 529, der die Bremskraft in zwei vorderen Betriebsbremsen 530a, 530b steuert, und einem Hinterachsmodulator 531 verbunden, der die Bremskraft in zwei Betriebsbremsen 532a, 532b der Hinterachse steuert. Die Betriebsbremsen 532a, 532b sind hier als sogenannte Tristop-Bremsen ausgebildet und umfassen sowohl übliche hydraulische Bremszylinder als Betriebsbremsen als auch integrierte Federspeicher-Feststellbremsen, wie sie im Folgenden weiter unten genauer beschrieben werden.

Zur Ansteuerung einer Feststellbremse in den Betriebsbremsen 532a, 532b weist das Bremssystem 520 ferner einen elektrischen Handbremsschalter (HCU) 534 auf. Der elektrische Handbremsschalter ist mit einer elektropneumatischen Handbremseinheit (EPH) bzw. Feststellbremseinheit 541 verbunden. Die Feststellbremseinheit (EPH) 541 weist eine eigene nicht separat gezeigte Steuereinheit auf und steuert entsprechend der Anforderung des elektrischen Handbremsschalters (HCU) 534 einen Feststellbremsdruck P_{P} an den Tristop-Bremsen 532a, 532b aus.

Das Bremssystem 520 umfasst in diesem Ausführungsbeispiel auch ein elektropneumatisches Anhängersteuermodul 1 gemäß der Erfindung. Das elektropneumatische Anhängersteuermodul 1 weist einen Vorratseingang 11 auf ist über diesen mittels einer Vorratsdruckzufuhrleitung 562a mit dem dritten Druckluftvorrat 525 verbunden. In diesem Ausführungsbeispiel weist das elektropneumatische Anhängersteuermodul auch einen Redundanzdruckanschluss 42 auf, an den eine Redundanzdruckzufuhrleitung 552 angeschlossen ist, die zu einem Bypass 533 führt, der seinerseits mit einem pneumatischen Steuerausgang 528a des Bremswertgebers 528 verbunden ist.

Darüber hinaus ist das elektropneumatische Anhängersteuermodul 1 über eine pneumatische Parkbremsdruckleitung 550 mit der Handbremseinheit (EPH) 541 verbunden, über die das elektropneumatische Anhängersteuermodul 1 den an den Tristop-Bremsen 532a, 532b ausgesteuerten Parkbremsdruck empfangen kann. Mittels eines direkten CAN-Bus 554 ist das elektropneumatische Anhängersteuermodul 1 mit dem Zentralmodul 527 über einen CAN-Bus Anschluss 202 verbunden. Die Steuereinheit der Feststellbremseinheit 541 ist optional mittels eines CAN-Bus 555 mit einem CAN-Bus Anschluss 202a des elektropneumatische Anhängersteuermodul 1 verbunden. Auch wenn hier eine direkte Verbindung zwischen dem elektropneumatischen Anhängersteuermodul 1 und der Feststellbremseinheit 541 gezeigt ist, ist es ebenso denkbar diese beiden Komponenten über einen Fahrzeugbus 538 miteinander zu verbinden.

Die weiteren in Fig. 1 gezeigten Elemente sind in diesem Ausführungsbeispiel rein illustrativer Natur und umfassen beispielsweise ABS-Module 535a, 535b, eine Steuereinheit 536 für autonomes Fahren, eine Energiequelle 537 für elektrische Energie, Lenkwinkel-Sensoren 539, sowie Sensoren 540a, 540b, 540c, 540d für die Bremsbelagverschleißsensierung.

Zum Steuern des Anhängerwagens 504 ist das elektropneumatische Anhängersteuermodul 1 über einen Anhängerversorgungsdruckanschluss 21 mit dem Anschluss 515 verbunden, der auch als "roter Kupplungskopf" bezeichnet wird und über einen Anhängerbremsdruckanschluss 22 mit dem Anschluss 516, der auch als "gelber Kupplungskopf" bezeichnet wird. Die Anschlüsse und deren Funktion in Bezug auf das elektropneumatische Anhängersteuermodul 1 werden im Folgenden näher erläutert werden.

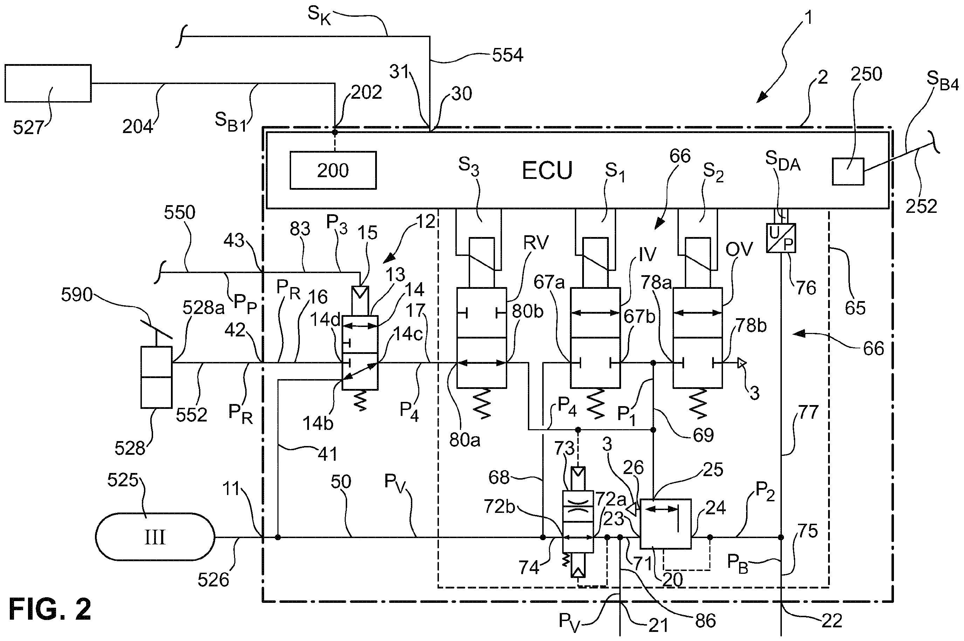

In Fig. 2 ist das Anhängersteuermodul 1 gemäß einem ersten Ausführungsbeispiel im Detail dargestellt. Das elektropneumatische Anhängersteuermodul 1 weist ein Gehäuse 2 auf, in dem eine elektronische Steuereinheit ECU sowie eine Anhängersteuer-Ventileinheit 65 angeordnet sind. Die Anhängersteuer-Ventileinheit 65 weist mehrere Ventile auf, die nachstehend im Einzelnen beschrieben werden. An dem Gehäuse 2 ist ein Vorratseingang 11 ausgebildet, der über eine Vorratsdruckzufuhrleitung 526 mit dem dritten Druckluftvorrat 525 verbunden ist. Weiterhin sind an dem Gehäuse 2 ein Redundanzdruckanschluss 42 ausgebildet, an den eine Redundanzdruckzufuhrleitung 552 angeschlossen ist, sowie ein Parkbremsdruckeingang 43, an den eine Parkbremsdruckleitung 550 angeschlossen ist, die in diesem Ausführungsbeispiel ihrerseits mit der elektropneumatischen Handbremseinheit (EPH) 541 verbunden ist (vgl. Fig. 1). Weiterhin weist das Anhängersteuermodul 1 zwei pneumatische Ausgänge auf, nämlich einerseits einen Anhängerversorgungsdruckanschluss 21, an dem der Vorratsdruck P_{V} anliegt, sowie einen Anhängerbremsdruckanschluss 22, an dem ein Bremsdruck P_{B} aussteuerbar ist. Im Inneren des Gehäuses 2 verläuft von dem Vorratseingang 11 eine Vorratsdruckverteilleitung 50, über die verschiedene Komponenten des Anhängersteuermoduls 1 mit Vorratsdruck P_{V} versorgt werden.

Die Anhängersteuer-Ventileinheit 65 weist eine Einlass-Auslass-Ventileinheit 66, auch als Vorsteuereinheit bezeichnet, auf, die ein Einlassventil IV, ein Auslassventil OV und ein Schaltventil, hier als Redundanzventil RV ausgebildet, aufweist. Ferner weist die Anhängersteuer-Ventileinheit 65 ein erstes Relaisventil 20 auf, welches nicht als inverses Relaisventil ausgebildet ist, sondern als "normales Relaisventil". Das Einlassventil IV ist als 2/2-Wegeventil ausgebildet und weist einen ersten Einlassventil-Anschluss 67a und einen zweiten Einlassventil-Anschluss 67b auf. Der erste Einlassventil-Anschluss 67a ist mit einer von der Vorratsverteilleitung abzweigenden ersten Vorratsdruckabzweigleitung 68 verbunden, und der zweite Einlassventil-Anschluss 67b ist mit einer ersten Steuerleitung 69 verbunden. Während in der ersten Vorratsdruckabzweigleitung 68 der Vorratsdruck P_{V} anliegt, ist durch elektrisches Schalten des Einlassventils IV basierend auf einem Signal S₁ von der Steuereinheit ECU in der ersten Steuerleitung 69 ein Betriebsbrems-Steuerdruck (erster Steuerdruck) P₁ aussteuerbar. Die erste Steuerleitung 69 ist mit einem Relaisventil-Steuereingang 25 des Relaisventils 20 verbunden.

Das Relaisventil 20 weist ferner einen Relaisventil-Arbeitseingang 23, einen Relaisventil-Ausgang 24 und einen Relaisventil-Entlüftungsausgang 26 auf. Der Relaisventil-Entlüftungsausgang 26 ist mit einer Drucksenke 3 verbunden. Der Relaisventil-Arbeitseingang 23 dient dazu, einen Vorratsdruck P_{V} aufzunehmen und ist zunächst mit einer zweiten Vorratsdruckabzweigleitung 71 verbunden, die mit einem ersten Anschluss 72a eines Anhängerabrissventils 73 verbunden ist. Das Anhängerabrissventil 73 ist als pneumatisch geschaltetes 2/2-Wegeventil ausgebildet und drucklos offen, in der in Fig. 2 gezeigten Schaltstellung. Bei entsprechender Schaltung des Anhängerabrissventils 73 wird der erste Anschluss 72a des Anhängerabrissventils 73 über eine Drossel mit dem zweiten Anschluss 72b des Anhängerabrissventils 73 verbunden, welcher wiederum über eine dritte Vorratsdruckabzweigleitung 74 mit der Vorratsdruckverteilleitung 50 verbunden ist. Im normalen Betrieb ist das Anhängerabrissventil 73 allerdings in der in Fig. 2 gezeigten Stellung, sodass an dem Relaisventil-Arbeitseingang 23 der Vorratsdruck P_{V} anliegt. Über das Anhängerabrissventil 73 wird ferner der Anhängerversorgungsanschluss 21 mittels einer Anhängerversorgungsleitung 86 mit Vorratsdruck P_{V} versorgt.

Empfängt nun das Relaisventil 20 den Betriebsbrems-Steuerdruck P₁ an dem Relaisventil-Steuereingang 25, steuert das Relaisventil 20 an dem Relaisventil-Ausgang 24 einen entsprechenden Relaisarbeitsdruck P₂ aus und stellt diesen über eine Anhängerbremsdruckleitung 75 an dem Anhängerbremsdruckanschluss 22 als Bremsdruck P_{B} bereit. Für eine entsprechende Druckregelung ist ein Bremsdrucksensor 76 für das Anhängersteuermodul 1 vorgesehen, der über eine Bremsdruckmessleitung 77 mit der Anhängerbremsdruckleitung 75 verbunden ist und ein entsprechendes Drucksignal S_{DA} an der Steuereinheit ECU bereitstellt.

Das Auslassventil OV ist elektropneumatisch geschaltet und beim Empfang eines Signals S₂ von der Steuereinheit ECU von dem ersten in Fig. 2 gezeigten stromlosen Schaltzustand, bei dem es geschlossen ist, in einen offenen Schaltzustand, der in Fig. 2 nicht gezeigt ist, versetzbar.

Zur Entlüftung der Betriebsbremsen 510a, 510b des Anhängerwagens 504 und somit zur Reduktion eines Bremsdrucks P_{B} am Anhängerbremsdruckanschluss 22 ist das Auslassventil OV vorgesehen. Das Auslassventil OV ist ebenso wie das Einlassventil IV als 2/2-Wegeventil ausgebildet und weist einen ersten Auslassventilanschluss 78a und einen zweiten Auslassventilanschluss 78b auf. Der erste Auslassventilanschluss 78a ist mit der ersten Steuerleitung 69 verbunden und der zweite Auslassventilanschluss 78b mit einer Drucksenke 3.

In einer Variante sind Einlass- und Auslassventil IV/OV integriert und als 3/2-Wegeventil ausgebildet, wobei ein erster Anschluss mit der ersten Vorratsdruckabzweigleitung 68 verbunden ist, ein zweiter Anschluss mit der ersten Steuerleitung 69 und ein dritter Anschluss mit der Drucksenke 3.

Um in einem Fehlerfall, in dem z. B. von der Steuereinheit ECU keine Signale S₁, S₂ bereitgestellt werden und Einlass- und Auslassventil IV, OV stromlos sind manuell den im Regelfall von der Steuereinheit ECU ausgesteuerten Bremsdruck P_{B} ersetzen zu können, weist das Anhängersteuermodul 1 den Redundanzdruckanschluss 42 auf. An den Redundanzdruckanschluss 42 ist über eine Redundanzdruckzufuhrleitung 552 ein Bremswertgeber 528 angeschlossen (vgl. Fig. 1). An den Redundanzdruckanschluss 42 ist im Inneren des Gehäuses 2 eine erste Redundanzdruckleitung 16 angeschlossen. Die Redundanzdruckleitung 16 verläuft in diesem ersten Ausführungsbeispiel zu einem pneumatischen Schaltventil 13, genauer ist sie mit einem ersten Anschluss 14a des Schaltventils 13 (welches weiter unten genauer beschrieben werden wird). Im normalen Fahrbetrieb ist das Schaltventil 13 in der zweiten, nicht gezeigten, Schaltstellung und der erste Anschluss 14a ist in Verbindung mit dem dritten Anschluss 14c. An einen dritten Anschluss 14c des Schaltventils 13 ist dann eine zweite Redundanzdruckleitung 17 angeschlossen, die ihrerseits mit einem ersten Redundanzventilanschluss 80a eines Redundanzventils RV verbunden ist. Der zweite Redundanzventilanschluss 80b ist mit einer Redundanzdrucksteuerleitung 81 verbunden, die in die erste Steuerleitung 69 mündet und somit in den Relaisventil-Steuereingang 25 des Relaisventils 20.

Das Redundanzventil RV ist als 2/2-Wegeventil ausgebildet und weist eine erste und eine zweite Schaltstellung auf, wobei es in Fig. 2 in der ersten offenen Schaltstellung gezeigt ist. Das Redundanzventil RV ist stromlos offen und dient dazu auch im Fehlerfall, bei dem die Einlass-Auslass-Ventileinheit 66 stromlos ist, einen Bremsdruck P_{B} aussteuern zu können. Wird im Fehlerfall durch Betätigen des Pedals 590 des Bremswertgebers 528 ein Redundanzdruck P_{R} in der Redundanzdruckzufuhrleitung 552 ausgesteuert, wird dieser Redundanzdruck P_{R} über die erste Redundanzdruckleitung 16, das Schaltventil 13, die zweite Redundanzdruckleitung 17, das offene Redundanzventil RV und die Redundanzdrucksteuerleitung 81 an dem Relaisventil-Steuereingang 25 des Relaisventils 20 bereitgestellt. An dem Relaisventil-Ausgang 24 des Relaisventils 20 wird in der Folge der Bremsdruck P_{B} ausgesteuert.

Zur Verknüpfung des Anhängersteuermoduls 1 mit der Handbremseinheit (EPH) 541 um gemäß der "europäischen Anhängersteuerung", die Betriebsbremsen 510a, 510b des Anhängerwagens 504 auch als Parkbremsen zu verwenden und so im Parkzustand an dem Anhängerbremsdruckanschluss 22 einen Bremsdruck P_{B} auszusteuern, während die Feststellbremse (Federspeicher) 6 der Tristop-Bremsen 532a, 532b entlüftet sind, ist eine Parkbremsventileinheit 12 vorgesehen mit dem pneumatisch gesteuerten Schaltventil 13, das als 3/2-wegeventil 14 ausgebildet ist und welches einen pneumatischen Steuereingang 15 zum Aufnehmen eines pneumatischen Steuerdrucks P₃ aufweist, wobei das pneumatisch gesteuerte Schaltventil 13 bei Verbinden des Parkbremsdruckeingang 43 mit der Drucksenke 3, also bei Entlüften der Feststellbremse 6, so geschaltet wird, dass ein Bremsdruck P_{B} an dem Anhängerbremsdruckanschluss 22 aussteuerbar ist. Dies ist dadurch realisiert, dass in der drucklosen Schaltstellung des Schaltventils 13 der dritte Anschluss 14c mit dem zweiten Anschluss 14b verbunden ist, an den eine vierte Vorratsdruckabzweigleitung 41 angeschlossen ist, die ihrerseits von der Vorratsdruckverteilleitung 50 abzweigt, und an dem somit der Vorratsdruck P_{V} anliegt.

Der besondere Vorteil liegt hierbei darin, dass kein inverser Relaiskolben verwendet werden muss, sondern das pneumatisch gesteuerte Schaltventil 13 basierend auf dem Steuerdruck P₃, der insbesondere unabhängig von einem fließenden Strom ist, geschaltet wird. Als Steuerdruck P₃ wird vorzugsweise der Feststellbremsdruck P_{P} an dem Parkbremsdruckeingang 43 verwendet. Dies ist in der konkreten Ausführungsform, die in Fig. 2 dargestellt ist, gelöst durch eine pneumatische Steuerleitung 83, die den Parkbremsdruckeingang 43 mit dem Steuereingang 15 des pneumatisch gesteuerten Schaltventils 13 verbindet. Das heißt, am Steuereingang 15 des pneumatisch gesteuerten Schaltventils 13 liegt in dieser Ausführungsform mit elektropneumatischer Handbremse der Druck der Federspeicher 6 an.

Bei einem Bremssystem mit einer konventionellen pneumatischen Feststellbremse wird hingegen an dem Parkbremsdruckeingang 43 vorzugsweise der Steuerdruck des Anhänger-Anschluss des Parkbremsventils in der Fahrerkabine angeschlossen. Über dieses wird dann in der ersten Schaltstellung (Fahrstellung) der Vorratsdruck ausgesteuert, in der zweiten Schaltstellung (Parkstellung) der Umgebungsdruck ausgesteuert, und in der dritten Schaltstellung (Anhängerkontrollstellung) der Vorratsdruck ausgesteuert. In der dritte Schaltstellung des Parkbremsventils ist also das pneumatisch gesteuerte Schaltventil 13 in der zweiten, nicht gezeigten, Schaltstellung und das Aussteuern des Bremsdrucks P_{B} am Anhängerbremsdruckanschluss 22 ist in dieser Schaltstellung verhindert.

Im normalen Fahrbetrieb sind die Federspeicher 6 belüftet, und somit ist das pneumatisch gesteuerte 3/2-Wegeventil 14 in der zweiten (nicht gezeigten) Schaltstellung, und an dem dritten Anschluss 14c wird der Redundanzdruck P_{R} ausgesteuert (falls ein solcher vorgegeben wird).

Wird nun der Federspeicher 6 entlüftet, sei es aufgrund der Einnahme einer Parkstellung oder aufgrund einer Hilfsbremsung mittels der Federspeicher 6, sinkt der Feststellbremsdruck P_{P} und folglich wird auch der Steuerdruck P₃ geringer, und das pneumatisch gesteuerte 3/2-Wegeventil 14 schaltet in die in Fig. 2 gezeigte erste Schaltstellung. Folglich wird an dem dritten Anschluss 14c nun ein entsprechender Steuerdruck P₄ ausgesteuert, der dem Vorratsdruck P_{V} entspricht.

In einer Variante wird das Redundanzventil RV bereits in diesem Status stromlos geschaltet und somit geöffnet und in der Folge liegt an dem Relaisventil-Steuereingang 25 des Relaisventils 20 der vierte Steuerdruck P₄ an. Auf diese Weise wird ein entsprechender Bremsdruck P_{B} an dem Anhängerbremsdruckanschluss 22 ausgesteuert.

In einer bevorzugten Variante allerdings, ist bei Beginn des Parkens oder gestuftem einlegen der Feststellbremse das Redundanzventil RV zunächst mit dem Signal S₃ bestromt und geschlossen; der von dem Schaltventil 13 ausgesteuerte Steuerdruck P₄ wird zunächst ausgesperrt. Das Einlegen der Betriebsbremsen 510a, 510b des Anhängerwagens 504 wird zu Beginn des Parkens über die Einlass-Auslass-Ventileinheit 66, die von der Steuereinheit ECU entsprechend geschaltet wird, realisiert. D.h. Wenn beispielsweise der Handbremsschalter 534 betätigt wird, bleibt das Redundanzventil RV zunächst geschlossen. Die Steuereinheit ECU schaltet aber das Einlassventil IV so, dass der Betriebsbrems-Steuerdruck P₁ an dem Relaisventil-Steuereingang 25 anliegt und ein entsprechender Bremsdruck P_{B} an dem Anhängerbremsdruckanschluss 22 ausgesteuert wird, während die Federspeicher 6 nach und nach entlüftet werden und ihre Bremskraft entfalten. Sobald die Federspeicher 6 zu einem gewissen Grad entlüftet sind, oder vollständig entlüftet sind, werden alle Ventile RV, IV, OV der Einlass-Auslass-Ventileinheit 66 stromlos geschaltet; das Einlassventil IV schließt, während das Redundanzventil RV geöffnet wird. Nun liegt über das Schaltventil 13 und das Redundanzventil RV der vierte Steuerdruck P₄ an dem Relaisventil-Steuereingang 25 an und der Bremsdruck P_{B} wird ausgesteuert; die Betriebsbremsen 510a, 510b des Anhängerwagens 504 bleiben eingelegt.

Das Anhängersteuermodul 1 weist ferner einen ersten CAN-Bus-Anschluss 30 auf, an den die erste CAN-Bus-Leitung 554 angeschlossen ist. Dieser erste CAN-Bus-Anschluss 30 ist als Eingang 31 für ein Anhängerkontrollstellungs-Signal S_{K} ausgebildet. Da in diesem Ausführungsbeispiel (Fig. 1, 2) eine elektropneumatische Handbremse (EPH) vorgesehen ist, wird das Anhängerkontrollstellungs-Signal S_{K} elektronisch übermittelt. Bei der "europäischen Anhängersteuerung", für die das Anhängersteuermodul 1 gemäß dem ersten Ausführungsbeispiel (Fig. 2) vorgesehen ist, ist es erforderlich, dass der Fahrzeugführer eine Anhängerkontrollstellung einlegen kann. Mit der Anhängerkontrollstellung wird überprüft, ob der Fahrzeugzug 500 allein aufgrund der Feststellbremsen 6, 532a, 532b des Zugwagens 502 sicher steht. Daher ist es erforderlich, dass in der Anhängerkontrollstellung die Betriebsbremsen 510a, 510b des Anhängerwagens 504 nicht eingelegt sind. Da die Parkbremsventileinheit 12 in diesem Ausführungsbeispiel (Fig. 2) eine "automatische" Bremsdruck P_{B} Aussteuerung an dem Anhängerbremsdruckanschluss 22 ausübt, sobald die Federspeicher 6 entlüftet werden und das Schaltventil 13 in die in Fig. 2 gezeigte erste Schaltstellung schaltet, ist gemäß diesem Ausführungsbeispiel ein Mechanismus vorgesehen, der die Aussteuerung des Bremsdrucks P_{B} in diesem Fall verhindert. Dazu wird von dem elektrischen Handbremsschalter 534 oder dem Zentralmodul 527 oder einem anderen Steuergerät ein Anhängerkontrollstellungs-Signal S_{K} an dem Eingang 31 bereitgestellt. Die Steuereinheit ECU ist dazu eingerichtet, das Anhängerkontrollstellungs-Signal S_{K} zu verarbeiten und ein entsprechendes Schaltsignal S₃ an das Redundanzventil RV zu senden, sodass das Redundanzventil RV in die zweite, in Fig. 2 nicht gezeigte Schaltstellung schaltet, sodass der Steuerdruck P₄ ausgesperrt wird. Zusätzlich muss das Auslassventil OV kurzzeitig geöffnet werden, um den etwaigen momentan eingesperrten Druck zu entlüften. In diesem Fall liegt dann kein Betriebsbrems-Steuerdruck P₁ an dem Relaisventil-Steuereingang 25 an, und kein Bremsdruck P_{B} wird an dem Anhängerbremsdruckanschluss 22 ausgesteuert.

Für den Fall, dass das elektropneumatische Anhängersteuermodul 1 gemäß dieser Erfindung mit einem konventionellen rein pneumatischen Feststellbremsmodul verwendet werden soll, wird an den Parkbremsdruckeingang 43 vorzugsweise das Parkbremsventil (nicht gezeigt) der Fahrerkabine, über das der Fahrzeugführer die Parkstellung und auch die Anhängerkontrollstellung anfordert, angeschlossen. Wählt der Fahrzeugführer mittels des Parkbremsventils die Anhängerkontrollstellung wird ein Steuerdruck an dem Parkbremsdruckeingang 43 ausgesteuert, sodass das Schaltventil 13 in der in Figur 2 nicht gezeigten zweiten Schaltstellung verbleibt und entsprechend kein Steuerdruck P₄ ausgesteuert wird. Folglich wird auch kein Parkbremsdruck P_{B} an dem Anhängerbremsdruckanschluss 22 ausgesteuert. Somit kann die Stellung des Anhängers kontrolliert werden.

Gemäß der Erfindung weist die Steuereinheit ECU in diesem Ausführungsbeispiel (Fig. 2) ferner einen Parkbremssignal-Eingang 200 zum Aufnehmen eines ersten elektronischen Bremsrepräsentationssignals S_{B1} auf, das die Betätigung einer Feststellbremse 6, 532a, 532b des Zugwagens 502 repräsentiert. Der Parkbremssignal-Eingang 200 ist in diesem Ausführungsbeispiel (Fig. 2) mit einem zweiten CAN-Bus-Anschluss 202 verbunden, an den eine zweite CAN-Bus-Leitung 204 angeschlossen ist, die ihrerseits mit dem Zentralmodul 527 verbunden ist. Das erste Bremsrepräsentationssignal S_{B1} ist in diesem Fall ein elektronisches Signal, das von dem Zentralmodul 527 bereitgestellt wird. Das erste Bremsrepräsentationssignal S_{B1} repräsentiert ein Bremsen mittels der Feststellbremsen 6, 532a, 532b und kann in einer einfachen Ausführungsform das Signal sein, das das Zentralmodul 527 an die Handbremseinheit 541 sendet. In einer Variante ist das erste Bremsrepräsentationssignal S_{B1} ein davon abgeleitetes Signal oder ein eigenständiges Signal, das von dem Zentralmodul 527 bereitgestellt wird.

Die Steuereinheit ECU ist dazu eingerichtet, basierend auf dem empfangenen ersten Bremsrepräsentationssignal S_{B1} wenigstens ein Ventil, vorzugsweise das Einlassventil IV, mittels eines Signals S₁ zu schalten, sodass an dem Anhängerbremsdruckanschluss 22 ein Bremsdruck P_{B} ausgesteuert wird. Hierdurch wird erreicht, dass der Anhängerwagen 504 in Übereinstimmung mit dem Zugwagen 502 gebremst wird, wenn die Feststellbremsen 6, 532a, 532b des Zugwagens 502 aktiviert werden. Im konkreten Ausführungsbeispiel gemäß Fig. 2 wird beim Schalten des Einlassventils IV der erste Einlassventilanschluss 67a in Verbindung mit dem zweiten Einlassventilanschluss 67b gesetzt, sodass in der ersten Steuerleitung 69 der Betriebsbrems-Steuerdruck P₁ ausgesteuert wird, der folglich an dem Relaisventil-Steuereingang 25 anliegt. Das Relaisventil 20 steuert daraufhin einen Relaisarbeitsdruck P₂ an dem Relaisventil-Ausgang 24 aus, sodass der Bremsdruck P_{B} an dem Anhängerbremsdruckanschluss 22 anliegt. Hierdurch wird eine besonders einfache Integration des Anhängersteuermoduls 1 in einen bestehenden Zugwagen 502 erreicht. Es ist nicht erforderlich, ein zusätzliches Ventil oder dergleichen vorzusehen, um eine Verbindung zwischen elektropneumatischer Handbremseinheit (EPH) 541 und dem Anhängersteuermodul 1 zu erreichen. Vielmehr ist es ausreichend, eine entsprechende zweite CAN-Busleitung 204 von dem Zentralmodul 527 zum zweiten CAN-Bus-Anschluss 202 vorzusehen, sodass an dem Parkbremssignal-Eingang 200 das erste Bremsrepräsentationssignal S_{B1} bereitgestellt werden kann.

Zur Umsetzung einer Rückfallebene für den Fall, dass ein Fehler in dem Bremssystem auftritt, z. B. das Zentralmodul 527 ausfällt und stromlos ist, weist das elektropneumatische Anhängersteuermodul 1 gemäß diesem Ausführungsbeispiel (Fig. 2), genauer gesagt die elektronische Steuereinheit ECU, darüber hinaus einen weiteren Anschluss 250 zum Empfang eines redundanten elektronischen Bremsrepräsentationssignals S_{B4} auf. Ein solches redundantes elektronisches Bremsrepräsentationssignal S_{B4} kann beispielsweise neben dem üblicherweise empfangenen Verzögerungsanforderungssignal für die Betriebsbremsen 510a, 510b des Anhängerwagens 504 ein von einem manuellen Bremswertgeber 528 ausgesteuertes redundantes elektronisches Signal sein. Beispielsweise weist der Bremswertgeber 528 einen Weggeber auf, der ein Betätigen des Pedals 590 in ein elektronisches Signal umsetzt. Dazu ist der Anschluss 250 mit einer Signalleitung 252 verbunden. Optional weist elektropneumatische Anhängersteuermodul 1 einen CAN-Bus Anschluss 202a auf (vgl. Fig. 1), an den ein CAN-Bus 555 angeschlossen ist, der zur Feststellbremseinheit 541 führt. Auch über diesen CAN-Bus 555 kann das Anhängersteuermodul 1 das redundante elektronische Bremsrepräsentationssignal S_{B4} im Fehlerfall erhalten.

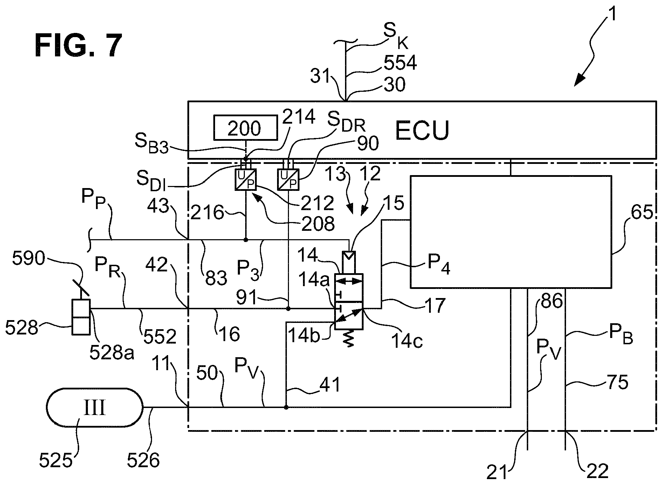

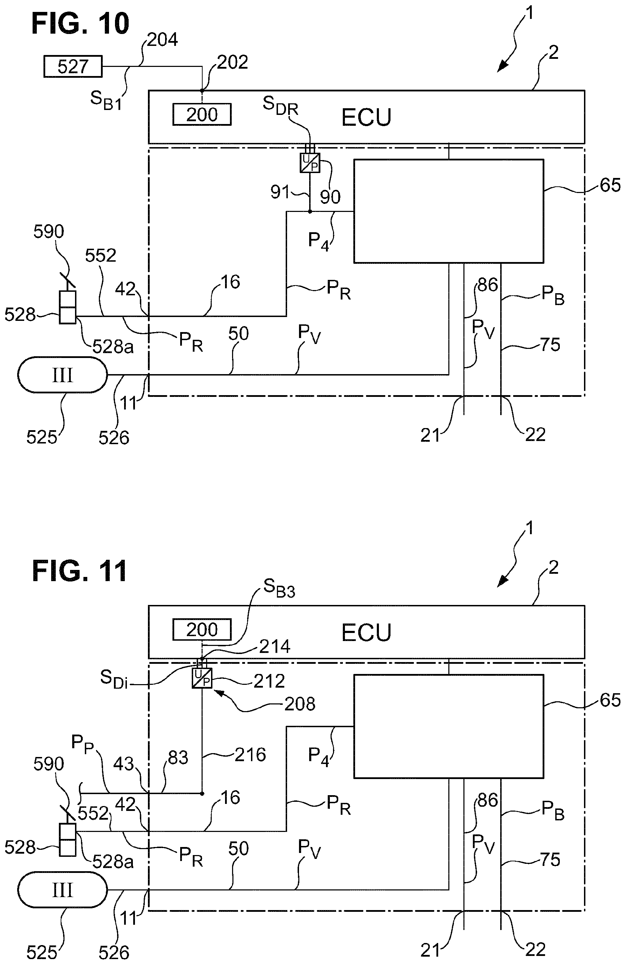

Alternativ weist das Anhängersteuermodul 1 einen zusätzlichen (in der Figur 2 nicht gezeigten; vgl. Figur 7 und 10) Drucksensor auf, der redundant den Redundanzdruck P_{R} erfasst und ein entsprechendes Drucksignal S_{DR} als das redundante Bremsrepräsentationssignal S_{B4} an dem Anschluss 250 bereitstellt.

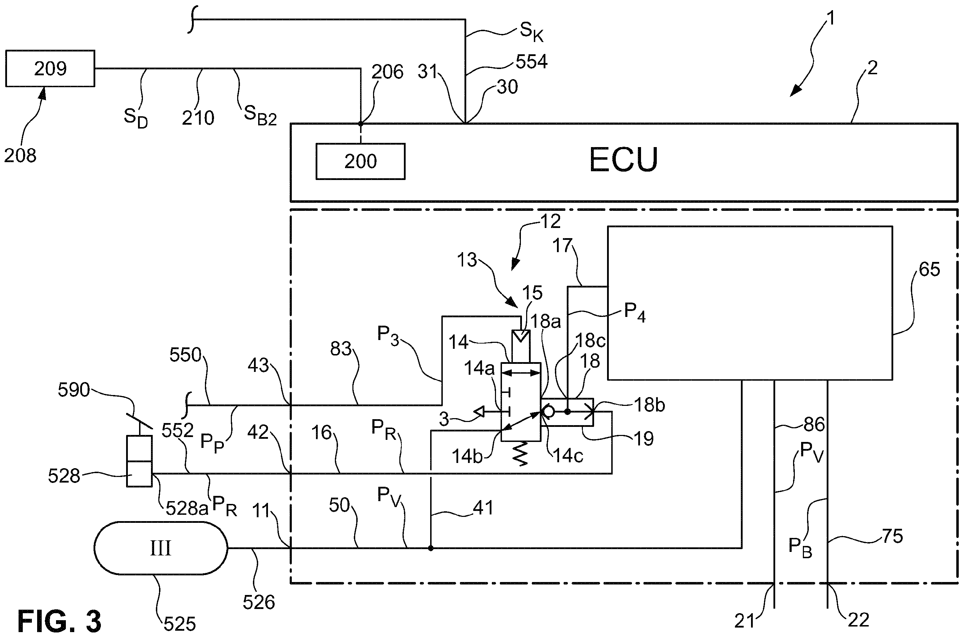

Die Fig. 3 bis 9 zeigen nun weitere Ausführungsbeispiele des elektropneumatischen Anhängersteuermoduls, wobei jeweils die Anhängersteuer-Ventileinheit 65 nur schematisch als "Blackbox" dargestellt ist. Die Anhängersteuer-Ventileinheit kann in den Ausführungsbeispielen der Fig. 3 bis 9 ebenso ausgebildet sein wie in dem Ausführungsbeispiel der Fig. 2. Die entsprechenden Leitungsanschlüsse sind im Folgenden bezeichnet. Gleiche und ähnliche Elemente sind mit gleichen Bezugszeichen versehen, sodass auf die obige Beschreibung vollumfänglich Bezug genommen wird.

Ein erster Unterschied in dem Ausführungsbeispiel gemäß Fig. 3 zu dem Ausführungsbeispiel gemäß Fig. 2 liegt in der Gestaltung des pneumatisch gesteuerten Schaltventils 13. Der dritte Anschluss 14c des Schaltventils 13 ist mit einem ersten Wechselventileingang 18a eines Wechselventils 18 verbunden. Das Wechselventil 18 ist vorzugsweise als doppeltwirkendes Rückschlagventil 19 ausgebildet, also als sogenanntes Select-High-Ventil. Das Wechselventil 18 weist einen zweiten Wechselventileingang 18b auf. Der jeweils höhere Druck an den Wechselventileingängen 18a, 18b wird an dem Wechselventilauslass 18c ausgesteuert. Die erste Redundanzdruckleitung 16 ist in diesem Ausführungsbeispiel (Fig. 3) nicht direkt mit dem ersten Anschluss 14a des Schaltventils 13 verbunden, sondern mit dem zweiten Wechselventileingang 18b. In der in Fig. 3 gezeigten drucklosen Schaltstellung des Schaltventils 13 liegt also an dem ersten Wechselventileingang 18a der Vorratsdruck P_{V} an, während an dem zweiten Wechselventileingang 18b der Redundanzdruck P_{R} anliegt. In die zweite Redundanzdruckleitung 17, die an den Wechselventilausgang 18c angeschlossen ist, wird ein Steuerdruck P₄ ausgesteuert. Der Steuerdruck P₄ ist der jeweils höhere Druck des Vorratsdrucks P_{V} und des Redundanzdrucks P_{R}. Im normalen Fahrbetrieb sind die Feststellbremsen des Zugwagens 502 gelöst, sodass ein Steuerdruck P₃ an dem Steuereingang 15 des Schaltventils 13 anliegt. Das Schaltventil 13 ist dann also in der in Fig. 3 nicht gezeigten zweiten Schaltstellung, in der der erste Anschluss 14a mit dem dritten Anschluss 14c in Verbindung steht. Der erste Anschluss 14a ist in diesem Ausführungsbeispiel (Fig. 3) mit einer Drucksenke 3 verbunden. Das heißt, im normalen Fahrbetrieb liegt Umgebungsdruck P₀ an dem Anschluss 14c an, sodass über das Wechselventil 18 lediglich der Redundanzdruck P_{R} in die zweite Redundanzdruckleitung 17 als Steuerdruck P₄ ausgesteuert werden kann. Werden nun die Feststellbremsen des Zugwagens eingelegt, also die Federspeicher 6 entlüftet, schaltet das Schaltventil 13 in die in Fig. 3 gezeigte Stellung. In der zweiten Redundanzdruckleitung 17 wird folglich ein Steuerdruck P₄ ausgesteuert, der dazu führt, dass an dem Anhängerbremsdruckanschluss 22 ein Bremsdruck P_{B} ausgesteuert wird. Die Betriebsbremsen des Anhängerwagens 504 werden eingebremst.

Ein weiterer Unterschied in dem zweiten Ausführungsbeispiel (Fig. 3) liegt darin, dass der Parkbremssignal-Eingang 200 dazu ausgebildet ist, mit einem Drucksensor 208 verbunden zu werden. Der Drucksensor 208 ist in diesem Ausführungsbeispiel als externer Drucksensor 209 ausgebildet. Der externe Drucksensor 209 ist mittels einer Signalleitung 210 an einen Drucksensoranschluss 206 an dem Gehäuse 2 des Anhängersteuermoduls 1 angeschlossen. Der Parkbremssignal-Eingang 200 ist in Verbindung mit dem Drucksensoranschluss 206, sodass der Parkbremssignal-Eingang 200 ein Signal von dem externen Drucksensor 209 empfangen kann. Der externe Drucksensor 209 erfasst vorzugsweise den Druck an einer Feststellbremse, insbesondere den Druck an einem Zylinder 6a eines Federspeichers 6, um so ein entsprechendes Drucksignal S_{D} als zweites Bremsrepräsentationssignal S_{B2} an dem Drucksensoranschluss 206 und somit an dem Parkbremssignal-Eingang 200 bereitzustellen. Der externe Drucksensor 209 kann letztlich irgendwo in dem Zugwagen 502 verbaut sein. Hierdurch lässt sich eine besonders einfache Integration des Anhängersteuermoduls 1 in einen bestehenden Zugwagen 502 vor allem mit konventioneller pneumatischer Feststellbremse erreichen. Es ist lediglich eine Signalleitung von einem vorhandenen externen Drucksensor 209 zum Drucksensoranschluss 206 zu verlegen, sodass an dem Parkbremssignal-Eingang 200 das Bremsrepräsentationssignal S_{B2} in Form des Drucksignals S_{D} bereitgestellt werden kann. Die weitere Funktionsweise des Anhängersteuermoduls 1 gemäß dem zweiten Ausführungsbeispiel (Fig. 3) ist identisch zu dem des ersten Ausführungsbeispiels (Fig. 2).

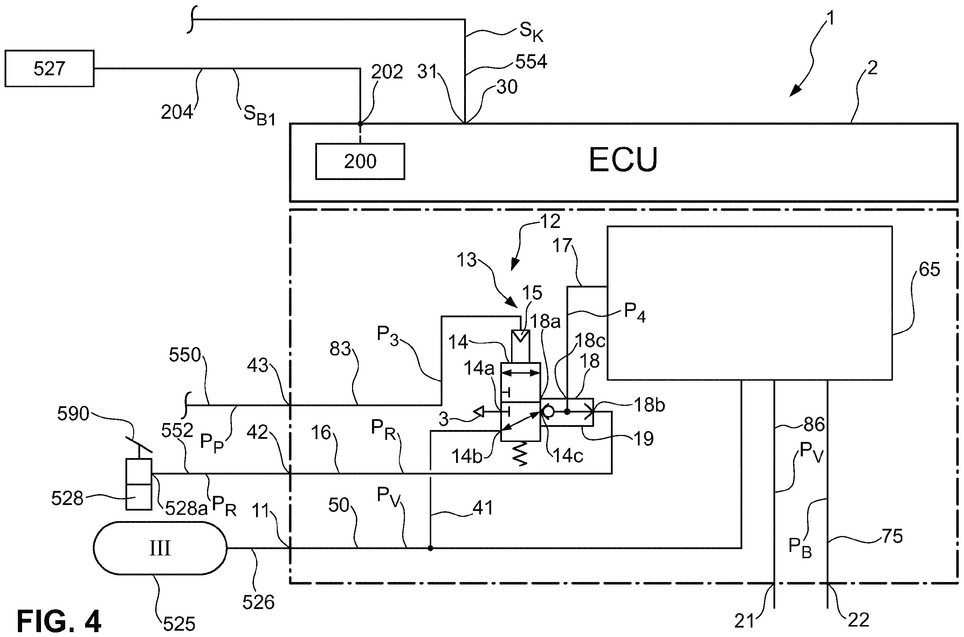

Das dritte Ausführungsbeispiel (Fig. 4) ist eine Kombination des ersten und zweiten Ausführungsbeispiels. Während die Parkbremsventileinheit 12 in dem dritten Ausführungsbeispiel (Fig. 4) entsprechend dem zweiten Ausführungsbeispiel (Fig. 2) ausgebildet ist, ist der Parkbremssignal-Eingang 200 entsprechend dem ersten Ausführungsbeispiel (Fig. 2) mit dem zweiten CAN-Bus-Anschluss 202 verbunden, an den die zweite CAN-Bus-Leitung 204 angeschlossen ist, die wiederum zum Zentralmodul 527 verläuft. Insofern wird vollumfänglich auf die obige Beschreibung zu den Fig. 2 und 3 verwiesen.

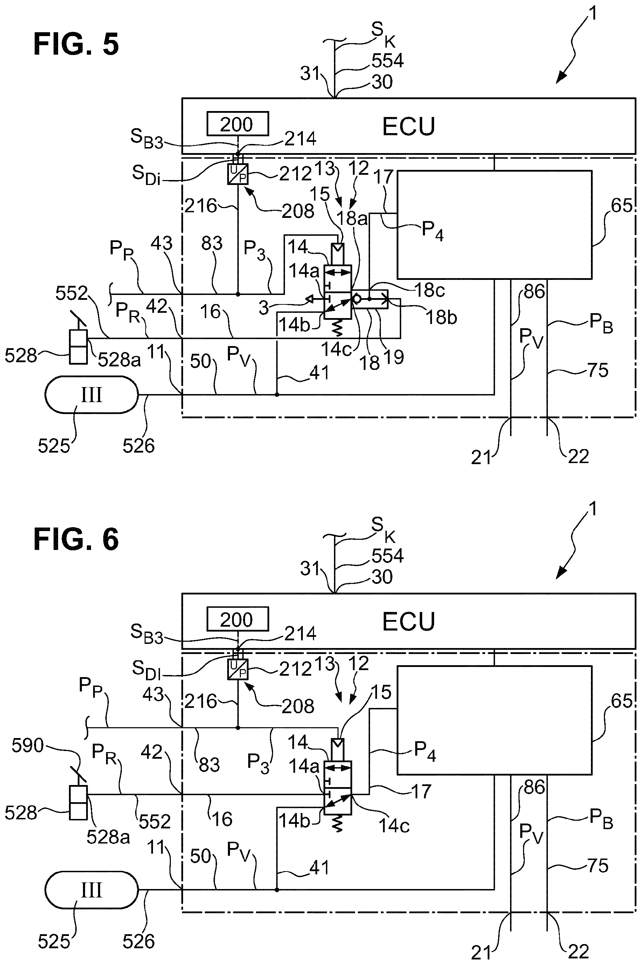

In den vierten und fünften Ausführungsbeispielen (Fig. 5 und 6) ist der Parkbremssignal-Eingang 200 wiederum dazu ausgebildet, mit einem Drucksensor 208 verbunden zu sein. In diesem Fall (Fig. 5 und 6) ist der Drucksensor 208 als interner Drucksensor 212 ausgebildet. Der Parkbremssignal-Eingang 200 ist über eine interne Schnittstelle 214 mit dem internen Drucksensor 212 verbunden. Der interne Drucksensor 212 ist über eine Messleitung 216 mit der pneumatischen Steuerleitung 83 verbunden, in der der Steuerdruck P₃ über den Parkbremsdruckeingang 43 ausgesteuert ist. Das heißt, der interne Drucksensor 212 erfasst den am Parkbremsdruckeingang 43 ausgesteuerten Parkbremsdruck, der dem Bremsdruck in den Feststellbremsen, insbesondere Federspeichern 6, entspricht oder einem äquivalenten Druck einer Vorsteuereinheit für die Feststellbremsen oder dem Druck, der von einem Parkbremsventil an dem Anhänger-Anschluss ausgesteuert wird. Der interne Drucksensor 212 stellt an der internen Schnittstelle 214 ein Drucksignal S_{DI} bereit, das an dem Parkbremssignal-Eingang 200 als drittes Bremsrepräsentationssignal S_{B3} bereitgestellt wird. Das Drucksignal S_{DI} bildet also das Bremsrepräsentationssignal S_{B3} gemäß dem vierten und fünften Ausführungsbeispiel.

Die übrige Funktionsweise des Anhängersteuermoduls 1 gemäß dem vierten und fünften Ausführungsbeispiel ist identisch zu den ersten drei Ausführungsbeispielen. Wiederum handelt es sich um ein Anhängersteuermodul 1 für eine "europäische Anhängersteuerung", und insofern weist das Anhängersteuermodul die Parkbremsventileinheit 12 auf.

Während die Parkbremsventileinheit 12 gemäß dem vierten Ausführungsbeispiel (Fig. 5) entsprechend dem zweiten und dritten Ausführungsbeispiel (Fig. 3 und 4) ausgebildet ist, ist die Parkbremsventileinheit 12 in dem fünften Ausführungsbeispiel (Fig. 6) entsprechend dem ersten Ausführungsbeispiel (Fig. 2) ausgebildet. Das heißt, im vierten Ausführungsbeispiel (Fig. 5) wird der Steuerdruck P₄ über das Wechselventil 18 ausgesteuert, während im fünften Ausführungsbeispiel (Fig. 6) eine direkte Aussteuerung des Steuerdrucks P₄ über das 3/2-Wegeventil 14 erfolgt.

Fig. 7 illustriert nun ein sechstes Ausführungsbeispiel, das grundsätzlich auf dem fünften Ausführungsbeispiel (Fig. 6) aufbaut. Gleiche und ähnliche Elemente sind mit gleichen Bezugszeichen versehen und insofern wird vollumfänglich auf die obige Beschreibung Bezug genommen.

Der einzige Unterschied zwischen den vorherigen Ausführungsbeispielen liegt in einem redundanten Drucksensor 90. Der redundante Drucksensor 90 ist über eine Redundanzdruckmessleitung 91 mit der ersten Redundanzdruckleitung 16 verbunden. Folglich misst der redundante Drucksensor 90 den Redundanzdruck P_{R} in der ersten Redundanzdruckleitung 16, der manuell durch Betätigung des Bremspedals 590 an dem Redundanzdruckanschluss 42 ausgesteuert wird. Mit Bezug auf die vorherigen Ausführungsbeispiele wurde bereits beschrieben, wie der manuell ausgesteuerte Redundanzdruck P_{R} über die erste Redundanzdruckleitung 16, ggf. das Wechselventil 18, die zweite Redundanzdruckleitung 17, das Redundanzventil RV, die Redundanzdrucksteuerleitung 81 und das Relaisventil 20 (vgl. Fig. 2) zu einem am Anhängerbremsdruckanschluss 22 ausgesteuerten Bremsdruck P_{B} führt.

Zur Erkennung einer Fahrerinteraktion bei autonomer Steuerung des Bremssystems 520, kann der redundante Drucksensor 90 genutzt werden. Der redundante Drucksensor 90 misst den manuell ausgesteuerten Redundanzdruck P_{R} und stellt ein entsprechendes Redundanzdrucksignal S_{DR} an der Steuereinheit ECU bereit.

Das von dem redundanten Drucksensor 90 bereitgestellte Redundanzdrucksignal S_{DR} repräsentiert einen Fahrerwunsch, da der redundante Drucksensor 90 den manuell mittels des Bremswertgebers 528 ausgesteuerten Redundanzdruck P_{R} erfasst. Die Steuereinheit ECU ist vorzugsweise dazu eingerichtet das Redundanzdrucksignal S_{DR}, das sie vom Drucksensor 90 empfängt, mit einem autonom ausgesteuerten Betriebs-Bremssignal, das sie beispielsweise von der Steuereinheit 536 für autonomes Fahren empfängt, zu vergleichen. Für den Fall, dass das Drucksignal S_{DR} eine höhere Verzögerungsanforderung repräsentiert als das von der Steuereinheit 536 empfangene Betriebs-Bremssignal, veranlasst die Steuereinheit ECU das Schalten des Redundanzventils RV, um basierend auf dem Redundanzdruck P_{R} die manuelle Aussteuerung eines Bremsdrucks P_{B} am Anhängerbremsdruckanschluss 22 zu ermöglichen. Mit anderen Worten, für den Fall, dass der Fahrer eine stärkere Verzögerung fordert als die Steuereinheit 536 für autonomes Fahren, wird das die Steuereinheit 536 ausgesperrt und der Fahrer übernimmt manuell.

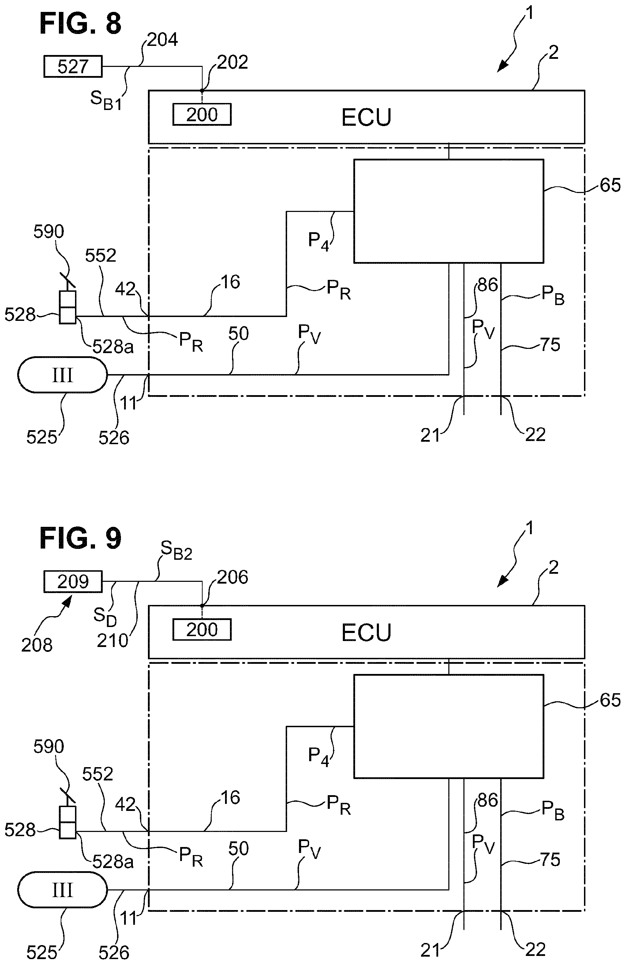

Die Ausführungsbeispiele sieben, acht, neun und zehn (Fig. 8, 9, 10, 11) zeigen nun jeweils ein Anhängersteuermodul 1 für die "skandinavische Anhängersteuerung". Die Ausführungsbeispiele sieben, acht, neun und zehn unterscheiden sich daher von den vorherigen Ausführungsbeispielen im Wesentlichen dadurch, dass sie keine Parkbremsventileinheit 12 aufweisen, da bei der "skandinavischen Anhängersteuerung" das Aussteuern eines Bremsdrucks P_{B} am Anhängerbremsdruckanschluss 22 für den Fall, dass die Feststellbremsen des Zugwagens 502 eingelegt werden, nur temporär erfolgen soll, und die Betriebsbremsen des Anhängers anschließend in der Parkstellung wieder gelöst werden.

Gemäß dem siebten Ausführungsbeispiel (Fig. 8) ist der Parkbremssignal-Eingang 200 des Anhängersteuermoduls 1 dazu eingerichtet, das Bremsrepräsentationssignal S_{B1} von dem Zentralmodul 527 zu empfangen. Insofern wird vollumfänglich auf die obige Beschreibung zu den Ausführungsbeispielen 1 und 3 verwiesen, bei denen der Parkbremssignal-Eingang 200 entsprechend ausgebildet ist. In einer bevorzugten Variante kann das elektropneumatische Anhängersteuermodul 1 das Bremsrepräsentationssignal S_{B1} auch über den dritten CAN-Bus 555 und den CAN-Bus Abschluss 202a (vgl. Fig. 1) direkt von der elektronischen Steuereinheit der Feststellbremseinheit 541 empfangen.

Gemäß dem achten Ausführungsbeispiel (Fig. 9) ist der Parkbremssignal-Eingang 200 dazu ausgebildet, ein Drucksignal S_{D} als Bremsrepräsentationssignal S_{B2} von einem Drucksensor 208, in diesem Fall ein externer Drucksensor 209, zu empfangen. Insofern wird vollumfänglich auf die obige Beschreibung zum zweiten Ausführungsbeispiel (Fig. 3) verwiesen, bei dem der Parkbremssignal-Eingang 200 entsprechend ausgebildet ist.

Das neunte Ausführungsbeispiel (Fig. 10) basiert wiederum auf dem siebten Ausführungsbeispiel (Fig. 8), umfasst aber, wie das sechste Ausführungsbeispiel (Fig. 7) einen redundanten Drucksensor 90. Für die genaue Beschreibung des redundanten Drucksensors 90 wird auf die obige Beschreibung zum sechsten Ausführungsbeispiel (Fig. 7) verwiesen.

Gemäß dem zehnten Ausführungsbeispiel (Fig. 11) ist der Parkbremssignal-Eingang 200 dazu ausgebildet, das Bremsrepräsentationssignal SB3 als Drucksignal S_{DI} von einem Drucksensor 208, in diesem Fall ein interner Drucksensor 212, zu empfangen. Insofern wird vollumfänglich auf die obige Beschreibung zu dem vierten und fünften Ausführungsbeispiel (Fig. 5 und 6) verwiesen, bei dem der Parkbremssignal-Eingang 200 entsprechend ausgebildet ist.

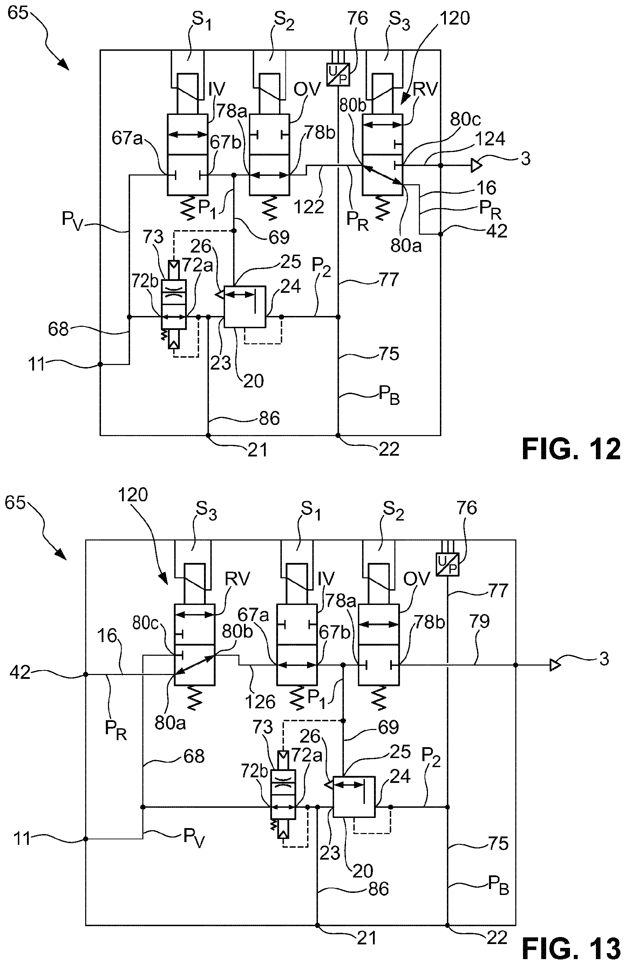

Die Fig. 12 und 13 illustrieren nun weitere Varianten der Anhängersteuer-Ventileinheit 65, und es kann erkannt werden, dass die Anhängersteuer-Ventileinheit 65 gemäß den Fig. 12 und 13 die aus den Fig. 2 bis 11 jeweils ersetzen kann.

Sowohl in der ersten Variante (Fig. 12) als auch in der zweiten Variante (Fig. 13) ist ein wesentlicher Unterschied zum ersten Ausführungsbeispiel (Fig. 2), dass das Redundanzventil RV als 3/2-Wegeventil 120 ausgebildet ist.

Mit Bezug auf die erste Variante (Fig. 12) liegt der wesentliche Unterschied in der Verschaltung des Redundanzventils RV, das als 3/2-Wegeventil 120 ausgebildet ist. Ein weiterer Unterschied liegt in der Umkehrung des Auslassventils OV, das in den Schaltstellungen umgekehrt ist, sodass es stromlos offen ist, wie in der in Fig. 10 gezeigten Schaltstellung. Das Auslassventil ist in Abweichung zum ersten Ausführungsbeispiel (Fig. 2) mit seinem zweiten Auslassventilanschluss 78b nicht unmittelbar an die Drucksenke 3 angeschlossen, sondern an eine erste Verbindungsleitung 122, die den zweiten Auslassventilanschluss 78b mit dem zweiten Redundanzventilanschluss 80b verbindet. Der dritte Redundanzventilanschluss 80c des 3/2-Wegeventils 120 ist über eine weitere Entlüftungsabzweigleitung 124 mit der Drucksenke 3 verbunden.

Die Arbeitsweise dieses Layouts ist wie folgt: Im Normalfahrbetrieb wird das Auslassventil OV basierend auf einem von der Steuereinheit ECU bereitgestellten Signal S₂ in die zweite, nicht gezeigte und geschlossene Schaltstellung, geschaltet. Über Schaltung des Einlassventils IV basierend auf dem Signal S₁ der elektronischen Steuereinheit ECU kann dann ein Betriebsbrems-Steuerdruck P₁ an dem Relaisventil-Steuereingang 25 des Relaisventils 20 ausgesteuert werden, und basierend auf diesem wiederum ein Relaisarbeitsdruck P₂ an dem Relaisventil-Ausgang 24. Auch das Redundanzventil RV ist im Normalfahrbetrieb in der zweiten, nicht gezeigten Schaltstellung, basierend auf einem Signal S₃. In dem stromlosen Zustand (wie in Fig. 12 gezeigt) ist der erste Redundanzventilanschluss 80a mit dem zweiten Redundanzventilanschluss 80b verbunden, sodass in der ersten Verbindungsleitung 122 der Redundanzdruck P_{R} aussteuerbar ist. Im normalen Fahrbetrieb ist es aber bevorzugt, dass der Redundanzdruck P_{R} ausgesperrt ist, und so wird das Signal S₃ angelegt, um das Redundanzventil RV in die zweite nicht gezeigte Schaltstellung zu bringen. In dieser zweiten nicht gezeigten Schaltstellung ist der zweite Redundanzventilanschluss 80b mit dem dritten Redundanzventilanschluss 80c verbunden. Das heißt, in der zweiten nicht gezeigten Schaltstellung des Redundanzventils RV ist die Drucksenke 3 mit dem zweiten Auslassventilanschluss 78b verbunden. Folglich kann der Relaisventil-Steuereingang 25 über entsprechende Schaltung des Auslassventils OV in die stromlose Stellung entlüftet werden, um so keinen Bremsdruck P_{B} an dem Anhängerbremsdruckanschluss 22 auszusteuern.

Der Vorteil dieser Schaltung ist im Falle eines Fehlers zu erkennen, wenn kein Signal mehr durch die elektronische Steuereinheit ECU ausgesteuert werden kann. In diesem Fall befinden sich das Einlassventil IV, das Auslassventil OV und das Redundanzventil RV jeweils im stromlosen, in Fig. 12 gezeigten Zustand. In diesem Zustand ist der Vorratsdruck P_{V} über das Einlassventil IV ausgesperrt und der Redundanzdruck P_{R} liegt an dem Relaisventil-Steuereingang 25 des Relaisventils 20 an. Selbst im Falle eines Ausfalls der elektronischen Steuereinheit ECU kann also ein Fahrzeugführer mittels des Bremswertgebers 528 redundant einen Bremsdruck P_{B} an dem Anhängerbremsdruckanschluss 22 aussteuern und den Fahrzeugzug 500 sicher bremsen.

Eine zweite Variante ist in Fig. 13 gezeigt. Auch bei der in Fig. 13 gezeigten Variante der Anhängersteuer-Ventileinheit 65, ist das Redundanzventil RV als 3/2-Wegeventil 120 ausgebildet. Der erste Redundanzventilanschluss 80a ist wiederum über die erste Redundanzdruckleitung 16 mit dem Redundanzdruckanschluss 42 verbunden. Der zweite Redundanzventilanschluss 80b ist, wie dies auch in dem ersten Ausführungsbeispiel (Fig. 2) der Fall ist, mit einer pneumatischen Leitung, hier einer zweiten Verbindungsleitung 126, verbunden. In Abweichung zum ersten Ausführungsbeispiel ist der dritte Redundanzventilanschluss 80c mit der ersten Vorratsdruckabzweigleitung 68 verbunden. Die zweite Verbindungsleitung 126 ist weiterhin mit dem ersten Einlassventilanschluss 67a verbunden und der zweite Einlassventilanschluss 67b ist, wie dies auch beim ersten Ausführungsbeispiel der Fall ist, mit der ersten Steuerleitung 69 verbunden.

Die Funktionsweise dieses Schaltungslayouts ist wie folgt: Im stromlosen Zustand, das heißt ohne Signal S₃ befindet sich das Redundanzventil RV in der in Fig. 13 gezeigten ersten Schaltstellung. In der ersten stromlosen Schaltstellung ist der erste Redundanzventilanschluss 80a mit dem zweiten Redundanzventilanschluss 80b verbunden. In der stromlosen Stellung lässt sich also ein Redundanzdruck P_{R} an der zweiten Verbindungsleitung 126 aussteuern. Im normalen Fahrbetrieb wird allerdings ein Signal S₃ geschaltet, sodass der dritte Redundanzventilanschluss 80c mit dem zweiten Redundanzventilanschluss 80b verbunden ist und der Vorratsdruck P_{V} an der zweiten Verbindungsleitung 126 ausgesteuert wird.

Das Einlassventil IV ist stromlos offen und in der ersten Schaltstellung (in Fig. 13 gezeigt), das Auslassventil OV ist stromlos geschlossen und in der ersten Schaltstellung (in Fig. 13 gezeigt). Im normalen Fahrbetrieb ist das Einlassventil IV geschlossen und ein Signal S₁ liegt an. Wird nun das Einlassventil IV geöffnet, kann der Betriebsbrems-Steuerdruck P₁ von dem Vorratseingang 11 über die erste Vorratsabzweigleitung 68, den dritten Redundanzventilanschluss 80c, den zweiten Redundanzventilventilanschluss 80b, die zweite Verbindungsleitung 126, den ersten Einlassventilanschluss 67a, den zweiten Einlassventilanschluss 67b und die erste Steuerleitung 69 an dem Relaisventil-Steuereingang 25 ausgesteuert werden, wodurch wiederum ein Bremsdruck P_{B} an dem Anhängerbremsdruckanschluss 22 ausgesteuert wird. Zum Entlüften des Relaisventil-Steuereingangs 25 wird dann von der elektronischen Steuereinheit ECU ein Signal S₂ an das Auslassventil OV gesendet, sodass dieses in die zweite Schaltstellung (offene Schaltstellung) geschaltet wird, während das Einlassventil IV mit einem Signal S₁ in die geschlossene zweite Schaltstellung versetzt wird. Mithin ist der Relaisventil-Steuereingang 25 über die erste Steuerleitung 69, den ersten Auslassventilanschluss 78a, den zweiten Auslassventilanschluss 78b und die Entlüftungsabzweigleitung 79 mit der Drucksenke 3 verbunden und kann entlüftet werden. Der Bremsdruck P_{B} nimmt wieder ab.

Auch in diesem Layout ist die Stellung der Ventile RV, IV, OV so gewählt, dass für den Fall, dass die Steuereinheit ECU ausfällt, ein Redundanzdruck P_{R} an dem Redundanzdruckanschluss 42 dazu führt, das an dem Anhängerbremsdruckanschluss 22 ein Bremsdruck P_{B} ausgesteuert wird. Das Redundanzventil RV verbindet im stromlosen Zustand den Redundanzdruckanschluss 42 mit der zweiten Verbindungsleitung 126. Das Einlassventil IV ist stromlos offen und der Redundanzdruck P_{R} kann über das Einlassventil IV in die erste Steuerleitung 69 gelangen. Stromlos ist das Auslassventil OV geschlossen und sperrt die erste Steuerleitung 69 gegenüber der Drucksenke 3 ab. Der Redundanzdruck PR liegt in diesem Fall also an dem Relaisventil-Steuereingang 25 an und ein Bremsdruck P_{B} kann an dem Anhängerbremsdruckanschluss 22 ausgesteuert werden.

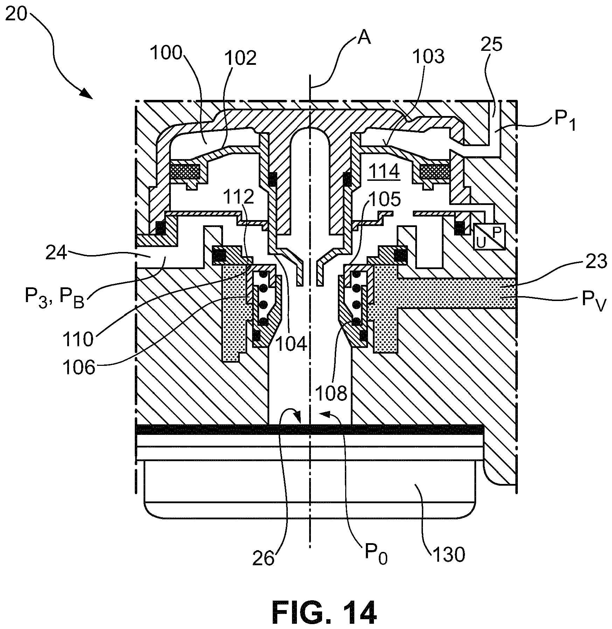

Weiterhin ist das Relaisventil 20 anders als im Stand der Technik bekannt, mit einer gemeinsamen Steuerkammer 100, in diesem Ausführungsbeispiel nur einer einzigen Steuerkammer 100, (vgl. Fig. 14) ausgebildet. Wie mit Bezug auf Fig. 2 bereits erläutert wurde, weist das Relaisventil 20 einen RelaisventilSteuereingang 25, den Relaisventil-Arbeitseingang 23, an den die zweite Vorratsdruckabzweigleitung 71 der Vorratsdruckverteilleitung 50 angeschlossen ist, und an dem der Druck P_{V} anliegt, einen Relaisventil-Ausgang 24, der über die Anhängerbremsdruckleitung 75 mit dem Anhängerbremsdruckanschluss 22 verbunden ist und über den der Relaisarbeitsdruck P₂, bzw. der Bremsdruck P_{B} aussteuerbar ist, sowie einen Relaisventil-Entlüftungsausgang 26 auf, über den der Relaisventil-Ausgang 24 entlüftet werden kann, und der mit der Drucksenke 3 verbunden ist. An dem Relaisventil-Entlüftungsausgang 26 liegt folglich ein Druck P₀ an, der dem Druck der Drucksenke 3, insbesondere der Umgebung, entspricht.

Wie sich aus Fig. 14 ergibt, weist das Relaisventil 20 eine gemeinsame Steuerkammer 100 auf, in die der einzige Relaisventil-Steuereingang 25 mündet. Es kann vorgesehen sein, dass weitere Steuereingänge in die Steuerkammer 100 münden. Über den Relaisventil-Steuereingang 25 sind sowohl der Betriebsbrems-Steuerdruck P₁, als auch Redundanzdruck P_{R} in die gemeinsame Steuerkammer 100 aussteuerbar; insofern sind für die beiden Steuerdrücke P₁, P_{R} nur eine gemeinsame Steuerkammer 100 vorgesehen. Die Steuerkammer 100 erfüllt somit zwei Funktionen: zum einen ist mittels der Steuerkammer 100 der Bremsdruck P_{B} in Abhängigkeit des Betriebsbrems-Steuerdruck P₁ aussteuerbar, zum anderen ist mittels der Steuerkammer 100 der Bremsdruck P_{B} auch in Abhängigkeit des Redundanzdrucks P_{R} aussteuerbar.

Die Steuerkammer 100 wirkt auf einen einzigen Steuerkolben 102. Der einzige Steuerkolben 102 ist axial gleitend entlang einer Achse A geführt. Bei Belüftung des Relaisventil-Steuereingangs 25 mit dem Steuerdruck P₃ kann sich der Steuerkolben 102 in Bezug auf Fig. 14 nach unten bewegen und kommt mit einem Ventilsitz 104 in Kontakt mit einem entsprechenden Schiebering 106, der federbelastet in die axial obere Stellung geschoben ist. Dazu ist eine Spiralfeder 108 vorgesehen. Der Schiebering 106 weist einen zweiten Ventilsitz 110 auf, der gegen einen Vorsprung 112 abdichtet und somit den Relaisventil-Arbeitseingang 23 zunächst geschlossen hält.

Der Steuerkolben ist in Fig. 14 in einer offenen Stellung gezeigt. In seiner Abschlussstellung ist der Ventilsitz 104 in Kontakt mit dem Schiebering 106. In der Abschlussstellung sind sowohl der Relaisventil-Arbeitseingang 23, als auch der Relaisventil-Ausgang 24 gegenüber dem Relaisventil-Entlüftungsausgang 26 abgeschlossen.

Aufgrund des ausgesteuerten Steuerrucks P₃ wirkt eine Kraft auf den Steuerkolben 102, die zum Öffnen des zweiten Ventilsitzes 110 führt, sodass der Druck P_{V} in den Arbeitsraum 114 überspringen kann. Der Druck in dem Arbeitsraum 114 steigt an und führt zu einer Gegenkraft auf den Steuerkolben 102, sodass sich der Steuerkolben wieder in die Abschlussstellung bewegt. Entsprechend wird ein Bremsdruck P_{B} an dem Relaisventil-Ausgang 24 ausgesteuert und dort gehalten.

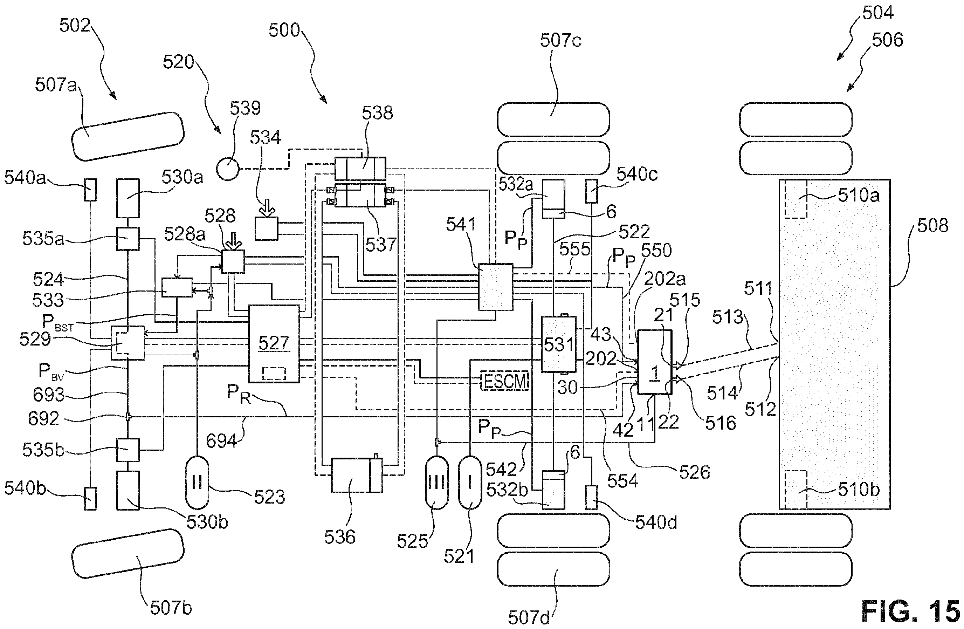

Figur 15 zeigt nun ein elftes Ausführungsbeispiel. Grundsätzlich ähnelt das in Figur 15 gezeigte Bremssystem 520 demjenigen gemäß Figur 1 und gleiche und ähnliche Elemente sind mit gleichen Bezugszeichen versehen. Insofern wird vollumfänglich auf die obige Beschreibung der Fig.1 Bezug genommen. Im Folgenden wird daher im Wesentlichen auf die Unterschiede eingegangen. Der Unterschied liegt in der Verschaltung im Layout des Bremssystems 520; auf das elektropneumatische Anhängersteuermodul 1 hat diese Änderung keinen bzw. nur wenig Einfluss.

Im Unterschied zum ersten Ausführungsbeispiel der Fig.1 ist der Redundanzanschluss 42 nicht mit über die Redundanzdruckzufuhrleitung 552 mit dem Bypass 553 und über diesen mit dem Bremswertgeber 528 verbunden; vielmehr wird an dem Redundanzanschluss 42 der Bremsdruck einer anderen Fahrzeugachse, in diesem Ausführungsbeispiel der Vorderachs-Bremsdruck P_{BV}, ausgesteuert. Dazu ist eine dritte Redundanzdruckzufuhrleitung 694 vorgesehen, die über ein T-Stück 692 mit einer Vorderachs-Bremsdruckleitung 693 verbunden ist. Über diese dritte Redundanzdruckzufuhrleitung 694 wird der Vorderachs-Bremsdruck P_{BV} der Betriebsbremsen 530a, 530b der Vorderachse an dem Redundanzdruckanschluss 42 ausgesteuert.

Der Bremswertgeber 528 ist dann abweichend zum ersten Ausführungsbeispiel (Fig. 1) nur an den Bypass 533 angeschlossen und über diesen mit dem Vorderachsmodulator 529 verbunden, um den Bremswertgeber-Steuerdruck P_{BST} an dem Vorderachsmodulator 529 redundant auszusteuern. Für den Fall, dass sowohl das elektropneumatisches Anhängersteuermodul 1 aufgrund eines Fehlers stromlos ist und auch der Vorderachsmodulator 529 aufgrund des Fehlers oder eines anderen Fehlers stromlos ist, ist es auf diese Weise möglich den manuell mittels des Fußpedals 590 ausgesteuerten Bremswertgeber-Steuerdruck P_{BST} über den Vorderachsmodulator 529 als Redundanzdruck P_{R} an dem Redundanzdruckanschluss 42 des elektropneumatischen Steuermoduls 1 auszusteuern.

### Bezugszeichenliste (Bestandteil der Beschreibung)

- A: Achse
- ECU: elektronische Steuereinheit
- EPH: elektropneumatische Handbremseinheit
- IV: Einlassventil
- OV: Auslassventil
- P₀: Umgebungsdruck
- P₁: Betriebsbrems-Steuerdruck
- P₂: Relaisarbeitsdruck
- P₃: Steuerdruck
- P₄: vierter Steuerdruck
- P_{B}: Bremsdruck (am Anhängerbremsdruckanschluss)
- P_{BV}: Vorderachs-Bremsdruck
- P_{BST}: Bremswertgeber-Steuerdruck
- P_{P}: Feststellbremsdruck
- P_{R}: Redundanzdruck
- P_{V}: Vorratsdruck
- RV: Redundanzventil
- S₁: Signal für Einlassventil
- S₂: Signal für Auslassventil
- S₃: Signal für Redundanzventil
- S_{B1}: erstes Bremsrepräsentationssignal
- S_{B2}: zweites Bremsrepräsentationssignal
- S_{B3}: drittes Bremsrepräsentationssignal
- S_{B4}: redundantes Bremsrepräsentationssignal
- S_{D}: Drucksignal (externer Sensor)
- S_{DI}: Drucksignal (interner Sensor)
- S_{DA}: Drucksignal (Anhängerbremsdruckanschluss)
- S_{DR}: Redundanzdrucksignal
- S_{K}: Anhängerkontrollstellungs-Signal
- TCV: Anhängersteuereinheit
- 1: elektropneumatisches Anhängersteuermodul
- 2: Gehäuse
- 3: Drucksenke
- 6: Federspeicher
- 6a: Zylinder d. Federspeichers
- 11: Vorratseingang
- 12: Parkbremsventileinheit
- 13: pneumatisch gesteuertes Schaltventil
- 14: 3/2-Wegeventil
- 14a: erster Anschluss
- 14b: zweiter Anschluss
- 14c: dritter Anschluss
- 15: pneumatischer Steuereingang
- 16: erste Redundanzdruckleitung
- 17: zweite Redundanzdruckleitung
- 18: Wechselventil
- 18a: erster Wechselventileingang
- 18b: zweiter Wechselventileingang
- 18c: Wechselventilauslass
- 19: doppeltwirkendes Rückschlagventil
- 20: Relaisventil
- 21: Anhängerversorgungsdruckanschluss
- 22: Anhängerbremsdruckanschluss
- 23: Relaisventil-Arbeitseingang
- 24: Relaisventil-Ausgang
- 25: Relaisventil-Steuereingang
- 26: Relaisventil-Entlüftungsausgang
- 30: erster CAN-Bus-Anschluss
- 31: Eingang
- 41: vierte Vorratsdruckabzweigleitung
- 42: Redundanzdruckanschluss
- 43: Parkbremsdruckeingang
- 50: Vorratsdruckverteilleitung
- 65: Anhängersteuer-Ventileinheit
- 66: Einlass-Auslass-Ventileinheit
- 67a: erster Einlassventil-Anschluss
- 67b: zweiten Einlassventil-Anschluss
- 68: erste Vorratsdruckabzweigleitung
- 69: erste Steuerleitung
- 71: zweite Vorratsdruckabzweigleitungen
- 72a: erster Anschluss d. Anhängerabrissventils
- 72b: zweiter Anschluss d. Anhängerabrissventils
- 73: Anhängerabrissventils
- 74: dritte Vorratsdruckabzweigleitung
- 75: Anhängerbremsdruckleitung
- 76: Bremsdrucksensor
- 77: Bremsdruckmessleitung
- 78a: erster Auslassventil-Anschluss
- 78b: zweiter Auslassventil-Anschluss
- 79: Entlüftungsabzweigleitung
- 80a: erster Redundanzventilanschluss
- 80b: zweiter Redundanzventilanschluss
- 80c: dritte Redundanzventilanschluss
- 81: Redundanzdrucksteuerleitung
- 83: pneumatische Steuerleitung
- 86: Anhängerversorgungsleitung
- 90: redundanter Drucksensor
- 91: Redundanzdruckmessleitung
- 100: Steuerkammer
- 102: Steuerkolben
- 104: Ventilsitz
- 106: Schiebering
- 108: Spiralfeder
- 110: zweiter Ventilsitz
- 112: Vorsprung
- 114: Arbeitsraum
- 120: 3/2-Wegeventil
- 122: erste Verbindungsleitung
- 124: weitere Entlüftungsabzweigleitung
- 126: zweite Verbindungsleitung
- 130: Geräuschdämpfer
- 200: Parkbremssignal-Eingang
- 202: zweiter CAN-Bus-Anschluss
- 202a: dritter CAN-Bus Anschluss für EPH
- 204: zweite CAN-Bus-Leitung
- 206: Drucksensoranschluss
- 208: Drucksensor
- 209: externer Drucksensor
- 210: Signalleitung
- 212: interner Drucksensor
- 214: interne Schnittstelle
- 216: Messleitung
- 250: Anschluss
- 252: Signalleitung
- 500: Fahrzeugzug
- 502: Zugwagen
- 504: Anhängerwagen
- 506: Achse
- 508: Anhängerbremssystem
- 510a, 510b: zwei Betriebsbremsen
- 511: Anschluss Versorgungsdruck Anhänger
- 512: Anschluss Steuerdruck Anhänger
- 513, 514: pneumatische Leitungen
- 515, 516: Anschlüssen
- 520: Bremssystem
- 521: ersten Druckluftvorrat
- 522: Hinterachsbremskreislauf
- 523: zweiter Druckluftvorrat
- 524: Vorderachsbremskreislauf
- 525: dritter Druckluftvorrat
- 526: Vorratsdruckzufuhrleitung
- 527: Zentralmodul
- 528: elektropneumatischer Bremswertgeber (BST)
- 528a: pneumatischer Steuerausgang
- 529: Vorderachsmodulator
- 530a, 530b: zwei vordere Betriebsbremsen
- 531: Hinterachsmodulator
- 532a, 532b: zwei (Tristop-)Betriebsbremsen
- 533: Bypass
- 534: Handbremsschalter (HCU)
- 535a, 535b: ABS-Module
- 536: Steuereinheit
- 537: Energiequelle
- 538: Fahrzeugbus
- 539: Lenkwinkel-Sensoren
- 540a, 540b, 540c, 540d: Sensoren für die Bremsbelagverschleißsensierung
- 541: elektropneumatische Handbremseinheit (EPH)
- 542: Anhängerbremskreislauf
- 550: pneumatische Parkbremsdruckleitung
- 552: Redundanzdruckzufuhrleitung
- 554: erster CAN-Bus
- 555: dritter CAN-Bus zur EPH
- 562a: Vorratsdruckzufuhrleitung
- 590: Pedal
- 690: Vorderachs-Wechselventil
- 692: T-Stück
- 693: Vorderachs-Bremsdruckleitung
- 694: dritte Redundanzdruckzufuhrleitung

## Patentansprüche

1. Elektropneumatisches Anhängersteuermodul (1) für ein elektronisch steuerbares pneumatisches Bremssystem (520) für einen Fahrzeugzug (500) mit einem Zugwagen (502) und einem Anhängerwagen (504), mit:
einer elektronischen Steuereinheit (ECU),
einem pneumatischen Vorratseingang (11), der mit einem Druckluftvorrat (525) verbindbar ist,
einer Anhängersteuer-Ventileinheit (65) mit einem oder mehreren elektropneumatischen Ventilen (RV, IV, OV),
einem Anhängerbremsdruckanschluss (22), und einem Anhängerversorgungsdruckanschluss (21), wobei die elektronische Steuereinheit (ECU) einen Parkbremssignal-Eingang (200) zum Aufnehmen eines elektronischen Bremsrepräsentationssignals (S_{B1}, S_{B2}, S_{B3}), das die Betätigung einer Feststellbremse (6, 532a, 532b) des Zugwagens (502) repräsentiert, aufweist, wobei
die elektronische Steuereinheit (ECU) dazu eingerichtet ist, basierend auf dem Bremsrepräsentationssignal (S_{B1}, S_{B2}, S_{B3}) wenigstens ein Ventil (IV) des einen oder der mehreren elektropneumatischen Ventile (RV, IV, OV) der Anhängersteuer-Ventileinheit (65) zu schalten, um einen Bremsdruck (P_{B}) an dem Anhängerbremsdruckanschluss (22) auszusteuern **dadurch gekennzeichnet, dass**
der Parkbremssignal-Eingang (200) dazu ausgebildet ist mit einem Drucksensor (208, 209, 212) verbunden zu werden, und
die elektronische Steuereinheit (ECU) dazu eingerichtet ist das elektronische Bremsrepräsentationssignal (S_{B2}, S_{B3}) von dem Drucksensor (208, 209, 212) zu empfangen,
wobei das elektropneumatische Anhängersteuermodul (1) eine Parkbremsventileinheit (12) mit einem pneumatisch gesteuerten Schaltventil (13) aufweist, welches einen pneumatischen Steuereingang (15) zum Aufnehmen eines pneumatischen Steuerdrucks (P₃) aufweist, wobei das pneumatisch gesteuerte Schaltventil (13) bei Entlüftung des Parkbremsdruckeingangs (43) so geschaltet wird, dass ein Bremsdruck (P_{B}) an dem Anhängerbremsdruckanschluss (22) aussteuerbar ist..

2. Elektropneumatisches Anhängersteuermodul (1) nach Anspruch 1, wobei die Anhängersteuer-Ventileinheit (65) wenigstens ein Einlassventil (IV) mit einem ersten Einlassventilanschluss (67a) und einem zweiten Einlassventilanschluss (67b) aufweist, wobei der erste Einlassventilanschluss (67a) mit dem Vorratseingang (11) verbunden ist und die elektronische Steuereinheit (ECU) dazu eingerichtet ist, basierend auf dem Bremsrepräsentationssignal (S_{B1}, S_{B2}, S_{B3}) das Einlassventil (IV) zu schalten, um einen Bremsdruck (P_{B}) an dem Anhängerbremsdruckanschluss (22) auszusteuern.

3. Elektropneumatisches Anhängersteuermodul (1) nach Anspruch 1 oder 2, wobei die elektronische Steuereinheit (ECU) dazu eingerichtet ist das Bremsrepräsentationssignal (S_{B1}) von einer weiteren Steuereinheit zu empfangen.

4. Elektropneumatisches Anhängersteuermodul (1) nach Anspruch 1 oder 2, wobei die elektronische Steuereinheit (ECU) dazu eingerichtet ist das Bremsrepräsentationssignal (S_{B1}) von einer elektronischen Steuereinheit einer Feststellbremseinheit (541) zu empfangen.

5. Elektropneumatisches Anhängersteuermodul (1) nach Anspruch 1 oder 2, wobei die elektronische Steuereinheit (ECU) dazu eingerichtet ist das Bremsrepräsentationssignal (S_{B1}) von einem Zentralmodul (527) zu empfangen.

6. Elektropneumatisches Anhängersteuermodul (1) nach Anspruch 1, aufweisend einen Parkbremsdruckeingang (43) zum Empfangen eines Feststellbremsdrucks (Pp) einer pneumatischen Feststellbremse (6, 532a, 532b) des Zugwagens (502).

7. Elektropneumatisches Anhängersteuermodul (1) nach Anspruch 6, aufweisend den Drucksensor (208, 212), wobei der Drucksensor (208, 212) den Feststellbremsdruck (Pp) an dem Parkbremsdruckeingang (43) erfasst und mit dem Parkbremssignal-Eingang (200) verbunden ist, um ein elektronisches Drucksignal (S_{Di}) als Bremsrepräsentationssignal (S_{B3}) an dem Steuergerät (ECU) bereitzustellen.

8. Elektropneumatisches Anhängersteuermodul nach Anspruch 1, wobei der pneumatische Steuerdruck (P₃) der Feststellbremsdruck (Pp) der Feststellbremsen (6, 532a, 532b) ist oder im Fall einer konventionellen rein pneumatischen Feststellbremse, ein Anhängerparkbremsdruck eines Parkbremsventils.

9. Elektropneumatisches Anhängersteuermodul nach Anspruch 1, wobei der pneumatische Steuerdruck (P₃) ein Feststellbrems-Steuerdruck in einer vorgeschalteten Vorsteuereinheit der Feststellbremseinheit (541) ist.

10. Elektropneumatisches Anhängersteuermodul (1) nach einem der vorstehenden Ansprüche 1, 8 oder 9, aufweisend einen Redundanzdruckanschluss (42) mit einer ersten Redundanzdruckleitung (16), und wobei das pneumatisch gesteuerte Schaltventil (13) mit einem Anschluss (14c) mit einer zweiten Redundanzdruckleitung (17) verbunden ist, mit welcher auch die erste Redundanzdruckleitung (16) verbindbar ist, sodass bei Schalten des pneumatisch gesteuerten Schaltventils (13) ein Druck in die zweite Redundanzdruckleitung (17) aussteuerbar ist.

11. Elektropneumatisches Anhängersteuermodul (1) nach Anspruch 10, wobei an den Redundanzdruckanschluss (42) ein pneumatischer Steuerausgang (528a) eines Bremswertgebers (528) anschließbar ist.

12. Elektropneumatisches Anhängersteuermodul (1) nach Anspruch 10, wobei an den Redundanzdruckanschluss (42) eine dritte Redundanzdruckleitung (694) anschließbar ist, zum Aussteuern eines Betriebsbrems-Bremsdrucks (P_{BV}) an dem Redundanzdruckanschluss (42).

13. Elektropneumatisches Anhängersteuermodul (1) nach Anspruch 10, 11 oder 12, wobei das pneumatisch gesteuerte Schaltventil (13) als 3/2-Wegeventil (14) mit einem ersten Anschluss (14a), einem zweiten Anschluss (14b) und einem dritten Anschluss (14c) ausgebildet ist.

14. Elektropneumatisches Anhängersteuermodul (1) nach Anspruch 13, wobei der zweite Anschluss (14b) mit dem Vorratseingang (11) und der erste Anschluss (14a) mit dem Redundanzdruckanschluss (42) verbunden sind.

15. Elektropneumatisches Anhängersteuermodul (1) nach Anspruch 13, wobei der erste Anschluss (14a) des pneumatisch gesteuerten 3/2-Wegeventils (14) mit einer Drucksenke (3) verbunden ist.

16. Elektropneumatisches Anhängersteuermodul (1) nach einem der vorstehenden Ansprüche 10 bis 15,wobei der dritte Anschluss (14c) des pneumatisch gesteuerten Schaltventils (13) mit einem ersten Wechselventileingang (18a) verbunden ist, ein zweiter Wechselventileingang (18b) mit dem Redundanzdruckanschluss (42) verbunden ist, und ein Wechselventilausgang (18c) mit der zweiten Redundanzdruckleitung (17) verbunden ist.

17. Elektropneumatisches Anhängersteuermodul (1) nach Anspruch 16, wobei das Wechselventil (18) als ein Rückschlagventil (19) mit zwei Eingängen (Select-High-Ventil) (18a, 18b) und einem Ausgang (18c) ausgebildet ist.

18. Elektropneumatisches Anhängersteuermodul (1) nach einem der vorstehenden Ansprüche, aufweisend ein Relaisventil (20), welches einen mit dem Vorratseingang (11) verbundenen Relaisventil-Arbeitseingang (23), einen mit dem pneumatischen Anhängerbremsdruckanschluss (22) verbundenen Relaisventil-Ausgang (24), und einen Relaisventil-Steuereingang (25) aufweist, der in eine gemeinsame innere Steuerkammer (100) mündet, wobei in die gemeinsame Steuerkammer (100) sowohl ein Betriebsbrems-Steuerdruck (P₁), als auch ein Redundanzdruck (P_{R}) aussteuerbar sind.

19. Elektropneumatisches Anhängersteuermodul (1) nach Anspruch 18, wobei die gemeinsame Steuerkammer (100) des Relaisventils (20) durch einen einzigen Steuerkolben (102) begrenzt ist.

20. Elektropneumatisches Anhängersteuermodul (1) nach Anspruch 18 oder 17, wobei die Steuerkammer (100) über ein elektronisch schaltbares Einlassventil (IV) mit dem Vorratseingang (11) verbunden ist.

21. Elektropneumatisches Anhängersteuermodul (1) nach Anspruch 18, wobei die Steuerkammer (100) mit der ersten Redundanzdruckleitung (16) verbunden ist.

22. Elektropneumatisches Anhängersteuermodul (1) nach einem der vorstehenden Ansprüche, aufweisend einen Eingang (31) an der elektronischen Steuereinheit (ECU) für ein Anhängerkontrollstellungs-Signal (S_{K}).

23. Elektropneumatisches Anhängersteuermodul (1) nach Anspruch 22, wobei die elektronische Steuereinheit (ECU) dazu eingerichtet ist, das Anhängerkontrollstellungs-Signal (S_{K}) digital, analog und/oder über einen CAN-Bus (554) zu empfangen.

24. Elektropneumatisches Anhängersteuermodul (1) nach den Ansprüchen 22 oder 23, wobei das Steuergerät (ECU) dazu ausgebildet ist bei Empfang eines Anhängerkontrollstellungs-Signals (S_{K}), wenigstens ein elektropneumatisches Ventil (RV, IV, OV) der Anhängersteuer-Ventileinheit (65) so zu schalten, dass der Anhängerbremsdruckanschluss (22) entlüftbar ist.

25. Elektropneumatisches Anhängersteuermodul (1) nach einem der vorstehenden Ansprüche, mit einem Anschluss (250) zum Empfang eines redundanten elektronischen Bremsrepräsentationssignals (S_{B4}) , wobei das Steuergerät (ECU) dazu eingerichtet ist, in Abhängigkeit des empfangenen redundanten elektronischen Bremsrepräsentationssignals (S_{B4}) wenigstens ein Ventil (IV) der Anhängersteuer-Ventileinheit (65) so zu schalten, dass ein entsprechender Bremsdruck (P_{B}) an dem Anhängerbremsdruckanschluss (22) ausgesteuert wird.

26. Elektropneumatisches Anhängersteuermodul (1) nach Anspruch 25, mit einem redundanten Drucksensor (90), der an der ersten und/oder zweiten Redundanzdruckleitung (16) und/oder dem Redundanzdruckanschluss (42) angeordnet ist und dazu ausgebildet ist, den pneumatischen Druck (P_{R}) an dem Redundanzdruckanschluss (42) zu erfassen und ein den erfassten Druck repräsentierendes Signal (S_{PR}) als das redundante elektronische Bremsrepräsentationssignal (S_{B4}) an der Steuereinheit (ECU) bereitzustellen.

27. Fahrzeug (500) mit einem elektronpneumatischen Anhängersteuermodul (1) nach einem der vorherigen Ansprüche 1 bis 26.

## Claims

1. Electropneumatic trailer control module (1) for an electronically controllable pneumatic brake system (520) for a vehicle combination (500) with a tractor vehicle (502) and a trailer vehicle (504), having:
an electronic control unit (ECU),
a pneumatic reservoir input (11), which is connectable to a compressed-air reservoir (525),
a trailer control valve unit (65) with one or more electropneumatic valves (RV, IV, OV),
a trailer brake pressure port (22), and a trailer supply pressure port (21),
wherein the electronic control unit (ECU) has a parking brake signal input (200) for receiving an electronic brake representation signal (S_{B1}, S_{B2}, S_{B3}) which represents the actuation of an immobilizing brake (6, 532a, 532b) of the tractor vehicle (502), wherein
the electronic control unit (ECU) is configured to, on the basis of the brake representation signal (S_{B1}, S_{B2}, S_{B3}), switch at least one valve (IV) of the one or more electropneumatic valves (RV, IV, OV) of the trailer control valve unit (65) in order to output a brake pressure (P_{B}) at the trailer brake pressure port (22), **characterized in that**
the parking brake signal input (200) is designed to be connected to a pressure sensor (208, 209, 212), and
the electronic control unit (ECU) is configured to receive the electronic brake representation signal (S_{B2}, S_{B3}) from the pressure sensor (208, 209, 212),
wherein the electropneumatic trailer control module (1) has a parking brake valve unit (12) with a pneumatically controlled switching valve (13) which has a pneumatic control input (15) for receiving a pneumatic control pressure (P₃), wherein, when the parking brake pressure input (43) is ventilated, the pneumatically controlled switching valve (13) is switched such that a brake pressure (P_{B}) can be output at the trailer brake pressure port (22).

2. Electropneumatic trailer control module (1) according to Claim 1, wherein the trailer control valve unit (65) has at least one inlet valve (IV) with a first inlet valve port (67a) and with a second inlet valve port (67b), wherein the first inlet valve port (67a) is connected to the reservoir input (11) and the electronic control unit (ECU) is configured to, on the basis of the brake representation signal (S_{B1}, S_{B2}, S_{B3}), switch the inlet valve (IV) in order to output a brake pressure (P_{B}) at the trailer brake pressure port (22).

3. Electropneumatic trailer control module (1) according to Claim 1 or 2, wherein the electronic control unit (ECU) is configured to receive the brake representation signal (S_{B1}) from a further control unit.

4. Electropneumatic trailer control module (1) according to Claim 1 or 2, wherein the electronic control unit (ECU) is configured to receive the brake representation signal (S_{B1}) from an electronic control unit of an immobilizing brake unit (541).

5. Electropneumatic trailer control module (1) according to Claim 1 or 2, wherein the electronic control unit (ECU) is configured to receive the brake representation signal (S_{B1}) from a central module (527).

6. Electropneumatic trailer control module (1) according to Claim 1, having a parking brake pressure input (43) for receiving an immobilizing brake pressure (Pp) of a pneumatic immobilizing brake (6, 532a, 532b) of the tractor vehicle (502).

7. Electropneumatic trailer control module (1) according to Claim 6, having the pressure sensor (208, 212), wherein the pressure sensor (208, 212) detects the immobilizing brake pressure (Pp) at the parking brake pressure input (43) and is connected to the parking brake signal input (200) in order to provide an electronic pressure signal (S_{Di}) as a brake representation signal (S_{B3}) at the control unit (ECU) .

8. Electropneumatic trailer control module according to Claim 1, wherein the pneumatic control pressure (P₃) is the immobilizing brake pressure (P_{P}) of the immobilizing brakes (6, 532a, 532b) or, in the case of a conventional purely pneumatic immobilizing brake, a trailer parking brake pressure of a parking brake valve.

9. Electropneumatic trailer control module according to Claim 1, wherein the pneumatic control pressure (P₃) is an immobilizing brake control pressure in an upstream pilot-control unit of the immobilizing brake unit (541).

10. Electropneumatic trailer control module (1) according to any of the preceding Claims 1, 8 or 9, having a redundancy pressure port (42) with a first redundancy pressure line (16), and wherein the pneumatically controlled switching valve (13) is connected by means of a port (14c) to a second redundancy pressure line (17), to which the first redundancy pressure line (16) is also connectable, such that, when the pneumatically controlled switching valve (13) is switched, a pressure can be output into the second redundancy pressure line (17).

11. Electropneumatic trailer control module (1) according to Claim 10, wherein a pneumatic control output (528a) of a brake transducer (528) can be connected to the redundancy pressure port (42).

12. Electropneumatic trailer control module (1) according to Claim 10, wherein a third redundancy pressure line (694) is connectable to the redundancy pressure port (42) in order to output a service brake brake pressure (P_{BV}) at the redundancy pressure port (42).

13. Electropneumatic trailer control module (1) according to Claim 10, 11 or 12, wherein the pneumatically controlled switching valve (13) is formed as a 3/2 directional valve (14) with a first port (14a), a second port (14b) and a third port (14c).

14. Electropneumatic trailer control module (1) according to Claim 13, wherein the second port (14b) is connected to the reservoir input (11) and the first port (14a) is connected to the redundancy pressure port (42).

15. Electropneumatic trailer control module (1) according to Claim 13, wherein the first port (14a) of the pneumatically controlled 3/2 directional valve (14) is connected to a pressure sink (3).

16. Electropneumatic trailer control module (1) according to any of the preceding Claims 10 to 15, wherein the third port (14c) of the pneumatically controlled switching valve (13) is connected to a first shuttle valve input (18a), a second shuttle valve input (18b) is connected to the redundancy pressure port (42), and a shuttle valve output (18c) is connected to the second redundancy pressure line (17).

17. Electropneumatic trailer control module (1) according to Claim 16, wherein the shuttle valve (18) is designed as a check valve (19) with two inputs (select-high valve) (18a, 18b) and one output (18c).

18. Electropneumatic trailer control module (1) according to any of the preceding claims, having a relay valve (20) which has a relay valve working input (23) connected to the reservoir input (11), a relay valve output (24) connected to the pneumatic trailer brake pressure port (22), and a relay valve control input (25), which opens into a common inner control chamber (100), wherein both a service brake control pressure (P₁) and a redundancy pressure (P_{R}) can be output into the common control chamber (100).

19. Electropneumatic trailer control module (1) according to Claim 18, wherein the common control chamber (100) of the relay valve (20) is delimited by a single control piston (102).

20. Electropneumatic trailer control module (1) according to Claim 18 or 17, wherein the control chamber (100) is connected to the reservoir input (11) by means of an electronically switchable inlet valve (IV).

21. Electropneumatic trailer control module (1) according to Claim 18, wherein the control chamber (100) is connected to the first redundancy pressure line (16).

22. Electropneumatic trailer control module (1) according to any of the preceding claims, having an input (31) on the electronic control unit (ECU) for a trailer monitoring setting signal (S_{K}).

23. Electropneumatic trailer control module (1) according to Claim 22, wherein the electronic control unit (ECU) is configured to receive the trailer monitoring setting signal (S_{K}) in digital or analogue form and/or via a CAN bus (554).

24. Electropneumatic trailer control module (1) according to Claims 22 or 23, wherein the control unit (ECU) is designed to, upon receiving a trailer monitoring setting signal (S_{K}), switch at least one electropneumatic valve (RV, IV, OV) of the trailer control valve unit (65) such that the trailer brake pressure port (22) can be ventilated.

25. Electropneumatic trailer control module (1) according to any of the preceding claims, having a connection (250) for receiving a redundant electronic brake representation signal (S_{B4}), wherein the control unit (ECU) is configured to switch at least one valve (IV) of the trailer control valve unit (65) in a manner dependent on the received redundant electronic brake representation signal (S_{B4}) such that a corresponding brake pressure (P_{B}) is output at the trailer brake pressure port (22).

26. Electropneumatic trailer control module (1) according to Claim 25, having a redundant pressure sensor (90), which is arranged on the first and/or second redundancy pressure line (16) and/or at the redundancy pressure port (42) and which is designed to detect the pneumatic pressure (P_{R}) at the redundancy pressure port (42) and to provide a signal (S_{PR}) , which represents the detected pressure, as the redundant electronic brake representation signal (S_{B4}) at the control unit (ECU) .

27. Vehicle (500) having an electropneumatic trailer control module (1) according to any of the preceding Claims 1 to 26.

## Revendications

1. Module de commande de remorque (1) électropneumatique pour un système de freinage (520) pneumatique à commande électronique pour un train routier (500) comprenant un véhicule tracteur (502) et un véhicule remorque (504), comprenant :
une unité de commande électronique (ECU),
une entrée de réserve pneumatique (11) qui peut être reliée à un réservoir d'air comprimé (525),
une unité de vanne de commande de remorque (65) dotée d'une ou de plusieurs vannes électropneumatiques (RV, IV, OV),
un raccord de pression de frein de remorque (22), et un raccord de pression d'alimentation de remorque (21),
l'unité de commande électronique (ECU) possédant une entrée de signal de frein de stationnement (200) destinée à capter un signal de représentation de frein (S_{B1}, S_{B2}, S_{B3}), qui représente l'actionnement d'un frein de stationnement (6, 532a, 532b) du véhicule tracteur (502), l'unité de commande électronique (ECU) étant conçue pour, en se basant sur le signal de représentation de frein (S_{B1}, SB2, S_{B3}), commuter au moins une vanne (IV) parmi l'une ou les plusieurs vannes électropneumatiques (RV, IV, OV) de l'unité de vanne de commande de remorque (65) afin de commander une pression de freinage (P_{B}) au niveau du raccord de pression de frein de remorque (22),
**caractérisé en ce que**
l'entrée de signal de frein de stationnement (200) est configurée pour être reliée à un capteur de pression (208, 209, 212), et
l'unité de commande électronique (ECU) étant conçue pour recevoir le signal de représentation de frein (S_{B2}, S_{B3}) du capteur de pression (208, 209, 212),
le module de commande de remorque (1) électropneumatique possédant une unité de vanne de frein de stationnement (12) comprenant une vanne de commutation (13) à commande pneumatique, laquelle possède une entrée de commande pneumatique (15) destinée à capter une pression de commande (P₃) pneumatique, la vanne de commutation (13) à commande pneumatique étant commutée lors de la purge d'air de l'entrée de pression de frein de stationnement (43) de telle sorte qu'une pression de freinage (P_{B}) peut être commandée au niveau du raccord de pression de frein de remorque (22) .

2. Module de commande de remorque (1) électropneumatique selon la revendication 1, l'unité de vanne de commande de remorque (65) possédant au moins une vanne d'admission (IV) pourvue d'un premier raccord de vanne d'admission (67a) et d'un deuxième raccord de vanne d'admission (67b), le premier raccord de vanne d'admission (67a) étant relié à l'entrée de réserve (11) et l'unité de commande électronique (ECU) étant conçue pour, en se basant sur le signal de représentation de frein (S_{B1}, S_{B2}, S_{B3}), commuter la vanne d'admission (IV) afin de commander une pression de freinage (P_{B}) au niveau du raccord de pression de frein de remorque (22).

3. Module de commande de remorque (1) électropneumatique selon la revendication 1 ou 2, l'unité de commande électronique (ECU) étant conçue pour recevoir le signal de représentation de frein (S_{B1}) de la part d'une unité de commande supplémentaire.

4. Module de commande de remorque (1) électropneumatique selon la revendication 1 ou 2, l'unité de commande électronique (ECU) étant conçue pour recevoir le signal de représentation de frein (S_{B1}) de la part d'une unité de commande d'une unité de frein de stationnement (541).

5. Module de commande de remorque (1) électropneumatique selon la revendication 1 ou 2, l'unité de commande électronique (ECU) étant conçue pour recevoir le signal de représentation de frein (S_{B1}) de la part d'un module central (527).

6. Module de commande de remorque (1) électropneumatique selon la revendication 1, possédant une entrée de pression de frein de stationnement (43) destinée à recevoir une pression de frein de stationnement (P_{P}) d'un frein de stationnement (6, 532a, 532b) pneumatique du véhicule tracteur (502).

7. Module de commande de remorque (1) électropneumatique selon la revendication 6, possédant le capteur de pression (208, 212), le capteur de pression (208, 212) détectant la pression de frein de stationnement (Pp) à l'entrée de pression de frein de stationnement (43) et étant relié à l'entrée de signal de frein de stationnement (200) afin de fournir au contrôleur (ECU) un signal de pression électronique (S_{D1}) en tant que signal de représentation de frein (S_{B3}).

8. Module de commande de remorque (1) électropneumatique selon la revendication 1, la pression de commande pneumatique (P₃) étant la pression de frein de stationnement (Pp) des freins de stationnement (6, 532a, 532b) ou, dans le cas d'un frein de stationnement conventionnel purement pneumatique, une pression de frein de parcage de remorque d'une vanne de frein de parcage.

9. Module de commande de remorque (1) électropneumatique selon la revendication 1, la pression de commande pneumatique (P₃) étant une pression de commande de frein de stationnement dans une unité de commande pilote montée en amont de l'unité de frein de stationnement (541).

10. Module de commande de remorque (1) électropneumatique selon l'une des revendications 1, 8 et 9, possédant un raccord de pression de redondance (42) comprenant une première conduite de pression de redondance (16), et la vanne de commutation (13) à commande pneumatique étant reliée par un raccord (14c) à une deuxième conduite de pression de redondance (17), à laquelle peut également être reliée la première conduite de pression de redondance (16), de sorte que lors de la commutation de la vanne de commutation (13) à commande pneumatique, une pression peut être commandée dans la deuxième conduite de pression de redondance (17).

11. Module de commande de remorque (1) électropneumatique selon la revendication 10, une sortie de commande (528a) d'un transmetteur de valeur de freinage (528) pouvant être raccordée au raccord de pression de redondance (42).

12. Module de commande de remorque (1) électropneumatique selon la revendication 10, une troisième conduite de pression de redondance (694) pouvant être raccordée au raccord de pression de redondance (42) afin de commander une pression de freinage de frein de service (P_{BV}) au niveau du raccord de pression de redondance (42).

13. Module de commande de remorque (1) électropneumatique selon la revendication 10, 11 ou 12, la vanne de commutation (13) à commande pneumatique étant réalisée sous la forme d'un distributeur 3/2 (14) comprenant un premier raccord (14a), un deuxième raccord (14b) et un troisième raccord (14c).

14. Module de commande de remorque (1) électropneumatique selon la revendication 13, le deuxième raccord (14b) étant relié à l'entrée de réserve (11) et le premier raccord (14a) au raccord de pression de redondance (42).

15. Module de commande de remorque (1) électropneumatique selon la revendication 13, le premier raccord (14a) du distributeur 3/2 (14) à commande pneumatique étant relié à un collecteur de pression (3).

16. Module de commande de remorque (1) électropneumatique selon l'une des revendications précédentes 10 à 15, le troisième raccord (14c) de la vanne de commutation (13) à commande pneumatique étant relié à une première entrée de sélecteur de circuit (18a), une deuxième entrée de sélecteur de circuit (18b) étant reliée au raccord de pression de redondance (42) et une sortie de sélecteur de circuit (18c) étant reliée à la deuxième conduite de pression de redondance (17).

17. Module de commande de remorque (1) électropneumatique selon la revendication 16, le sélecteur de circuit (18) étant réalisé sous la forme d'un clapet de non-retour (19) pourvu de deux entrées (vanne de sélection haute) (18a, 18b) et d'une sortie (18c) .

18. Module de commande de remorque (1) électropneumatique selon l'une des revendications précédentes, possédant une vanne relais (20), laquelle possède une entrée de travail de vanne relais (23) reliée à l'entrée de réserve (11), une sortie de vanne relais (24) reliée au raccord de pression de frein de remorque (22) pneumatique et une entrée de commande de vanne relais (25), qui débouche dans une chambre de commande interne (100) commune, une pression de commande de frein de service (P₁) ainsi qu'une pression de redondance (P_{R}) pouvant toutes deux être commandées dans la chambre de commande (100) commune.

19. Module de commande de remorque (1) électropneumatique selon la revendication 18, la chambre de commande (100) commune de la vanne relais (20) étant délimitée par un piston de commande (102) unique.

20. Module de commande de remorque (1) électropneumatique selon la revendication 18 ou 17, la chambre de commande (100) étant reliée à l'entrée de réserve (11) par le biais d'une vanne d'admission (IV) à commutation électronique.

21. Module de commande de remorque (1) électropneumatique selon la revendication 18, la chambre de commande (100) étant reliée à la première conduite de pression de redondance (16).

22. Module de commande de remorque (1) électropneumatique selon l'une des revendications précédentes, possédant une entrée (31) au niveau de l'unité de commande électronique (ECU) pour un signal de position de commande de remorque (S_{K}).

23. Module de commande de remorque (1) électropneumatique selon la revendication 22, l'unité de commande électronique (ECU) étant conçue pour recevoir le signal de position de commande de remorque (S_{K}) sous forme logique, analogique et/ou par le biais d'un bus CAN (554) .

24. Module de commande de remorque (1) électropneumatique selon la revendication 22 ou 23, le contrôleur (ECU) étant conçu pour, lors de la réception du signal de position de commande de remorque (S_{K}), commuter au moins une vanne électropneumatique (RV, IV, OV) de l'unité de vanne de commande de remorque (65) de telle sorte que l'air peut être purgé du raccord de pression de frein de remorque (22).

25. Module de commande de remorque (1) électropneumatique selon l'une des revendications précédentes, comprenant un raccord (250) destiné à recevoir un signal de représentation de frein (S_{B4}) électronique redondant, le contrôleur (ECU) étant conçu pour commuter au moins une vanne (IV) de l'unité de vanne de commande de remorque (65) en fonction du signal de représentation de frein (S_{B4}) électronique redondant reçu de telle sorte qu'une pression de freinage (PB) correspondante est commandée au niveau du raccord de pression de frein de remorque (22).

26. Module de commande de remorque (1) électropneumatique selon la revendication 25, comprenant un capteur de pression redondant (90), qui est disposé au niveau de la première conduite de pression de redondance (16) et/ou du raccord de pression de redondance (42) et qui est conçu pour détecter la pression pneumatique (P_{R}) au niveau du raccord de pression de redondance (42) et fournir à l'unité de commande (ECU) un signal (S_{PR}) représentant la pression détectée sous la forme du signal de représentation de frein (S_{B4}) électronique redondant.

27. Véhicule (500) équipé d'un module de commande de remorque (1) électropneumatique selon l'une des revendications 1 à 26.
